# EUROPÄISCHE PATENTSCHRIFT

(11) **EP 1 984 221 B1**
(45) Veröffentlichungstag und Bekanntmachung des Hinweises auf die Patenterteilung: **09.12.2009**
(21) Anmeldenummer: 07726264.0
(22) Anmeldetag: 30.01.2007
(51) Int. Cl.: B60T 17/02, F04B 45/04

(54) **MOTOR-PUMPENAGGREGAT**
MOTOR/PUMP ASSEMBLY
GROUPE DE POMPE POUR MOTEUR

(30) Priorität: 10.02.2006 DE 102006006493; 29.01.2007 DE 102007005223
(43) Veröffentlichungstag der Anmeldung: 29.10.2008
(73) Patentinhaber: Continental Teves AG & Co. oHG, 60488 Frankfurt (DE)
(72) Erfinder: SCHONLAU, Jürgen, 65396 Walluf (DE); RÜFFER, Manfred, 65843 Sulzbach (DE); RITTER, Wolfgang, 61440 Oberursel (DE); SEITZ, Karlheinz, 64653 Lorsch (DE); DRUMM, Stefan A., 55291 Saulheim (DE); GONZALEZ, Jose, 32549 Bad Oeynhausen (DE); JÜRGING, Michael, 65779 Kelkheim (DE); GUDE, Daniela, 61389 Schmitten (DE); VOLKERING, Oliver, 60316 Frankfurt/M (DE)
(86) Internationale Anmeldenummer: PCT/EP2007/050913
(87) Internationale Veröffentlichungsnummer: WO 2007/090764

(56) Entgegenhaltungen:
- EP-A1- 0 743 452
- WO-A-95/00187
- WO-A-95/31362
- DE-A1- 2 211 096
- DE-A1- 3 529 978
- DE-A1- 19 904 350
- DE-C- 275 455

## Beschreibung

Die Erfindung betrifft ein Motor-Pumpenaggregat zur Bereitstellung von Druck für eine Bremsbetätigungseinrichtung einer Kraftfahrzeugbremsanlage mit einem Vakuumbremskraftverstärker, umfassend eine Pumpe und einen die Pumpe antreibenden elektrischen Motor, wobei die Pumpe als Doppelmembranpumpe mit zwei gegenüberliegenden Arbeitsmembranen vorgesehen ist, welche jeweils zwischen einem Pumpengehäuse und einem Arbeitsraumdeckel eingespannt ist und dadurch einen Arbeitsraum begrenzt und welche mittels eines, Exzenter und Pleuelstangen aufweisenden Kurbelantriebs bewegbar sind, wobei dem Arbeitsraum jeweils ein Einlasskanal mit Einlassventil und ein Auslasskanal mit Auslassventil zugeordnet ist.

Zur Bereitstellung von Vakuum für einen pneumatischen Bremskraftverstärker, dessen Innenraum in wenigstens eine Vakuumkammer und eine Arbeitskammer unterteilt ist, werden Vakuumpumpen eingesetzt, die aus der Vakuumkammer Restluft ansaugen und in die Atmosphäre ausstoßen. In der Automobilindustrie werden hierzu in der Regel Flügelzellenpumpen oder Schwenkflügelpumpen eingesetzt. Diese haben prinzipbedingt viel Reibung und müssen geschmiert werden, um eine akzeptable Lebensdauer zu erreichen. Vom Verbrennungsmotor des Kraftfahrzeuges angetriebene Vakuumpumpen mit Flügeln werden daher an den Ölkreislauf des Verbrennungsmotors angeschlossen. Dennoch muss ein nennenswerter Anteil der vom Verbrennungsmotor abgegebenen Leistung zum Antrieb einer solchen Pumpe aufgewendet werden. Und dies auch dann, wenn das Vakuum in der zu evakuierenden Kammer bereits voll ausgebildet ist. Daher ist es sinnvoll, die Vakuumpumpe mit elektrischer Energie zu betreiben und nur dann einzuschalten, wenn der absolute Druck in der Vakuumkammer über einen vorbestimmten Wert steigt.

Weiterhin kann in Fahrzeugen mit Elektro- bzw. Hybridantrieb die Vakuumpumpe nicht bzw. zeitweise nicht durch den Verbrennungsmotor angetrieben werden. Daher werden in diesen Fahrzeugen elektrisch angetriebene Vakuumpumpen eingesetzt.

Eine solche elektrisch angetriebene Pumpe mit einem Schmiermittelkreislauf auszustatten oder an einen solchen anzuschließen, würde einen unverhältnismäßig hohen Aufwand bedeuten. Somit kommen für den Einsatz in Kraftfahrzeugen mit Bremsanlagen mit elektrisch angetriebener Vakuumpumpe nur trocken laufende Vakuumpumpen in Frage. In Flügelzellenpumpen wird hierfür das selbstschmierende Material Graphit verwendet, aus dem mit hohem Aufwand die Flügel mit der erforderlichen Präzision hergestellt werden. Daher sind die Bemühungen dahingehend, zur elektrischen Bereitstellung von Bremsvakuum eine Membranpumpe zu verwenden.

Membranpumpen sind allgemein bekannt. Aus der DE 35 29 978 A1 ist ein Motor-Pumpenaggregat umfassend eine Doppelmembranpumpe mit einer rotierenden Exzenterwelle bekannt, welche von einem Elektromotor angetrieben wird.

Aus DE 275 455 C ist eine Membranpumpe bekannt, welche insbesondere bei Staubsaugervorrichtungen Verwendung findet. Die darin beschriebene Membranpumpe weist vier Membranen auf, die kreisförmig um eine Antriebswelle angeordnet sind und mittels eines Exzenters bewegt werden.

In der EP 0 743 452 A1 wird eine Membranpumpe mit vier Membranen beschrieben, welche mit einem einzigen Kunststoffformteil verbunden sind. Ein Teil der Membrane liegt dabei außerhalb der Arbeitskammer, um mit kreisförmigen Schlitzen versehen Ventilklappen zu bilden. Sitze im Gehäuse bzw. im Deckel bilden ein Einlass- bzw. ein Auslassventil.

Ein im Pumpengehäuse vorgesehener Auslasskanal leitet die Luft zu einem Auslassanschluss, durch welchen die Luft aufgeblasen wird.

Von der Automobilindustrie werden sehr hohe Anforderungen in Bezug auf den akustischen Komfort der Kraftfahrzeugkomponenten gestellt und von den Zulieferern robuste, langlebige Pumpen mit sehr geringen Geräuschemissionen gefordert. Diese Forderungen sind mit den bekannten Membranpumpen aufgrund von Vibrationen nicht zu erfüllen bzw. erfordern einen hohen Aufwand an Schalldämpfungsmaßnahmen.

Aufgabe der vorliegenden Erfindung ist es, ein Motor-Pumpenaggregat bereitzustellen, welches eine trocken laufende Pumpe umfasst und den hohen Anforderungen in Bezug auf den akustischen Komfort Rechnung trägt. Eine weitere Aufgabe der Erfindung ist es, das Motor-Pumpenaggregat bezüglich seiner Pumpwirkung zu verbessern.

Die Aufgabe wird erfindungsgemäß dadurch gelöst, dass die Auslasskanäle in den Arbeitsraumdeckeln und im Pumpengehäuse derart angeordnet sind, dass aus den Arbeitsräumen verdrängte Luft in einen den Kurbelantrieb umgebenden Innenraum des Pumpengehäuses geleitet wird, und dass eine Luftauslasseinheit vorgesehen ist, welche ein geräuscharmes Ausblasen der Luft aus dem Innenraum ermöglicht. Der Innenraum, auch Kurbelraum genannt, dient so als Schalldämpfungsraum, da die ausgeblasene Luft nicht direkt in die Atmosphäre geleitet wird und kein Ausblasgeräusch entstehen kann.

Vorzugsweise weist die Luftauslasseinheit Mittel zur Schalldämpfung aufweist. Dadurch kann ein Luftschall beim Austreten der Luft aus der Luftauslasseinheit vermindert werden.

Die Luftauslasseinheit verschließt gemäß einer vorteilhaften Ausführungsform der Erfindung einen Durchbruch einer Wand des Pumpengehäuses dichtend. Der Durchbruch kann somit die Funktion eines Montagefensters während der Montage des Motor-Pumpenaggregates erfüllen, wodurch die Montage erheblich vereinfacht werden kann.

Eine weitere Montageerleichterung wird gemäß einer vorteilhaften Weiterbildung der Erfindung dadurch erreicht, dass die Luftauslasseinheit ein Filtergehäuse, ein Filter, ein Luftauslassdeckel, eine Luftauslassverschlusskappe sowie eine Ventilkörper umfasst und als vormontierbare Baugruppe vorgesehen ist.

Ein Zurückströmen der ausgestoßenen Luft sowie das Eindringen flüssiger oder gasförmiger Substanzen in die Luftauslasseinheit werden vorzugsweise dadurch verhindert, dass der Luftauslassdeckel, die Luftauslassverschlusskappe sowie der Ventilkörper ein Rückschlagventil bilden. Alternativ können das Filtergehäuse, die Luftauslassverschlusskappe sowie der Ventilkörper das Rückschlagventil bilden.

Eine unverlierbare Baugruppenbildung wird gemäß einer vorteilhaften Ausführungsform erreicht, indem das Filtergehäuse mit dem Luftauslassdeckel vernietet ist.

Vorzugsweise ist der Luftauslassdeckel mittels Schraubelementen an der Wand befestigbar, wodurch in einfacher Weise eine abgedichtete Befestigung ermöglicht wird.

Gemäß einer vorteilhaften Weiterbildung der Erfindung sind die beiden Einlasskanäle über im Pumpengehäuse ausgebildete Kanäle miteinander verbunden sind und weisen einen gemeinsamen Anschluss auf. Ein zweiter Anschluss ist nicht notwendig, wodurch der Einbauraum des Motor-Pumpenaggregates optimiert werden kann.

Der Anschluss weist vorzugsweise Mittel zur Befestigung eines Schlauches auf. Beispielsweise ist es gemäß einer vorteilhaften Ausführungsform denkbar, dass der Anschluss als Ansaugrohrstutzen ausgebildet ist.

Eine weitere vorteilhafte Ausführungsform eines erfindungsgemäßen Motor-Pumpenaggregates sieht vor, dass ein Adapter vorgesehen ist, der in dem Anschluss dichtend befestigt ist und der einen Adapterabgang aufweist, wobei der Adapterabgang Mittel zur Befestigung eines Schlauches aufweist. Dadurch kann der Adapter an einzelne Kundenwünsche angepasst werden, ohne dass eine Änderung des Pumpengehäuses notwendig ist.

Der Adapter kann vorzugsweise mittels einer Rastverbindung in dem Anschluss positionierbar oder mittels stiftförmiger Elemente drehbar in dem Anschluss angeordnet sein, wobei die stiftförmigen Elemente in eine Außennut des Adapters eingreifen.

Um ein Motor-Pumpenaggregat für verschiedenste Einbauverhältnisse zu erhalten, weist das Pumpengehäuse gemäß einer vorteilhaften Ausführungsform der Erfindung zwei gegenüberliegende Anschlüsse auf, wobei ein Anschluss verschlossen ist. Hierzu kann einer der Anschlüsse mittels eines Stopfens dicht verschlossen werden oder einer der Anschlüsse bleibt bei der Herstellung verschlossen und wird erst bei Bedarf beispielsweise durch Aufbohren geöffnet.

Das Pumpengehäuse kann vorzugsweise aus Kunststoff oder aus Aluminium hergestellt sein, wobei durch das Pumpengehäuse aus Kunststoff ein geringes Gewicht des Motor-Pumpenaggregates erreicht wird. Dagegen erlaubt ein Pumpengehäuse aus Aluminium eine gute Wärmeableitung vom Motor, wodurch die Lebensdauer des Motors verlängert werden kann.

Ebenso kann der Arbeitsraumdeckel aus Kunststoff oder aus Aluminium hergestellt sein, wodurch die Herstellung des Arbeitsraumdeckels vereinfacht werden kann.

Eine Montagevereinfachung wird gemäß einem vorteilhaften Ausführungsbeispiel dadurch erreicht, dass das Einlassventil und das Auslassventil eines Arbeitsraumes jeweils als vormontierbare Ventileinheit vorgesehen sind. Dabei kann eine weitere Vereinfachung der Montage erzielt werden, indem die vormontierbare Ventileinheit jeweils in den Arbeitsraumdeckel integrierbar ist und mit diesem eine vormontierbare Arbeitsraumdeckeleinheit bildet.

Gemäß einer vorteilhaften Ausbildung der Erfindung weist der Arbeitsraumdeckel einen Oberdeckel und einen Unterdeckel auf, welche abdichtend miteinander verbunden sind, wobei die Ventile zwischen Oberdeckel und Unterdeckel vorgesehen sind. Dadurch können die Ventile in einfacher Weise montiert werden.

Vorzugsweise ist der Oberdeckel mit dem Unterdeckel verschweißt oder verschraubt. Dadurch kann gleichzeitig eine Zentrierung des Oberdeckels auf dem Unterdeckel ohne weitere Mittel erfolgen.

Eine einfache Herstellung des Arbeitsraumdeckels wird gemäß einer vorteilhaften Ausführungsform der Erfindung dadurch erreicht, dass der Einlasskanal im Oberdeckel ausgebildet und der Auslasskanal zwischen Oberdeckel und Unterdeckel vorgesehen ist.

Eine optimale Ausnutzung der Durchtrittsfläche des Einlassventils wird vorzugsweise erreicht, indem sich der Einlasskanal im Bereich des Einlassventils in mehrere, kreisringförmig um eine Mittelachse des Einlassventils angeordnete Einzelkanäle aufteilt.

Vorzugsweise sind das Einlassventil sowie das Auslassventil jeweils schräg zu Symmetrieachsen der Pumpe angeordnet, wodurch eine bauraumoptimierte Ausgestaltung des Arbeitsraumdeckels möglich ist. Dabei sind die Ventile vorzugsweise als Plattenventile mit Ventilscheibe vorgesehen.

Um die Montage der Ventilscheiben zu erleichtern, sind gemäß einer vorteilhaften Weiterbildung der Erfindung im Unterdeckel Positionierungszapfen zur Positionierung von Ventilscheiben vorgesehen.

Im Unterdeckel sind vorzugsweise dem Einlass- und dem Auslassventil zugeordnete Arbeitsraumdeckelöffnungen vorgesehen, wobei die Arbeitsraumdeckelöffnungen kreisringförmig um eine Mittelachse der Ventile angeordnet sind. Dadurch kann das so genannte Schadvolumen ohne Reduzierung des Durchtrittsvolumens der Arbeitsraumdeckelöffnungen möglichst gering gehalten werden.

Gemäß einer vorteilhaften Weiterbildung der Erfindung sind die Einlass- und Auslasskanäle derart im Pumpengehäuse angeordnet, dass die beiden Arbeitsraumdeckel identisch ausgestaltet sind. Somit ist es möglich, die Arbeitsraumdeckel für beide Seiten der Pumpe gleich auszugestalten und eine Bevorratung von zwei unterschiedlichen Arbeitsraumdeckeln ist nicht erforderlich.

Vorzugsweise sind Abstandseinstellmittel vorgesehen, um den Abstand der Arbeitsraumdeckel von der Arbeitsmembrane einzustellen, wodurch Fertigungstoleranzen sowie Montagetoleranzen ausgeglichen werden können.

Die Abstandseinstellmittel können in einfacher Weise vorgesehen sein, wenn gemäß einer vorteilhaften Ausführungsform die Abstandseinstellmittel durch eine einstellbare Verbindung zwischen Pleuelstange und einem mit der Arbeitsmembran verbundenen Stößel gebildet sind.

Eine andere vorteilhafte Ausführungsform der Erfindung sieht vor, dass Abstandseinstellmittel vorgesehen, um den Abstand der Arbeitsraumdeckel von dem Pumpengehäuse einzustellen. Dadurch ist es ebenso möglich, Fertigungstoleranzen sowie Montagetoleranzen auszugleichen. Beispielsweise kann die Einstellung des Abstandes mittels einer Schweißverbindung erfolgen oder sie erfolgt mittels einer Schraubverbindung zwischen Arbeitsraumdeckel und Pumpengehäuse.

Eine Zentrierung des Kurbelantriebes innerhalb des Pumpengehäuses wird in vorteilhafter Weise dadurch erreicht, indem eine Motorwelle des elektrischen Motors in einem ersten, im Motor angeordneten Lager und in einem zweiten Lager gelagert ist, wobei das zweite Lager zum Teil von einem Motorgehäuse und zum Teil von dem Pumpengehäuse aufgenommen wird, und dass ein Motorwellenende in das Pumpengehäuse hineinragt. Dadurch kann auf eine zusätzliche Lagerung der Motorwelle im Pumpengehäuse verzichtet werden.

Eine Reduzierung der Einzelteile wird vorzugsweise dadurch erzielt, indem der Kurbelantrieb (Exzenter und Pleuelstangen) auf der Motorwelle angeordnet ist. Eine zusätzliche Exzenterwelle kann dadurch entfallen

Gemäß einer vorteilhaften Ausführungsform ist es jedoch auch denkbar, dass der Kurbelantrieb (Exzenter und Pleuelstangen) auf einer Exzenterwelle angeordnet ist, welche mit der Motorwelle mittels einer Gewindeverbindung verbunden ist, wobei Mittelachsen der Motorwelle und der Exzenterwelle fluchten.

Um einen ruhigen Lauf des Motor-Pumpenaggregates zu gewährleisten, ist vorzugsweise vorgesehen, dass Mittelpunkte der Exzenter diametral bezogen auf eine Mittelachse der Motorwelle bzw. der Exzenterwelle angeordnet sind. Dadurch können die Reaktionskräfte der oszillierenden Massen nahezu ausgeglichen werden.

Eine weitere Bauteilreduzierung kann dadurch erreicht werden, dass die Exzenter einstückig als Doppelexzenter ausgebildet sind.

Gemäß einer vorteilhaften Weiterbildung des erfindungsgemäßen Motor-Pumpenaggregates weisen zur erleichterten Montage des Arbeitsraumdeckels das Pumpengehäuse und die Arbeitsraumdeckel Mittel zur definierten Positionierung der Arbeitsraumdeckel auf dem Pumpengehäuse auf.

Vorzugsweise erfolgt die Ansteuerung des Motor-Pumpenaggregates über eine elektronische Steuereinheit in Abhängigkeit eines Signals eines Sensors, welcher einen Druckunterschied zwischen der Vakuumkammer und der Arbeitskammer oder einen absoluten Druck in der Vakuumkammer des Bremskraftverstärkers erfasst.

Die Pleuelstangen können gewichtsoptimiert aus Kunststoff hergestellt sind, wenn die Pleuelstangen gemäß einer bevorzugten Ausführungsform im Bereich eines Pleuelauges eingespritzte Stützringe zur Stabilisierung von Kugellagern aufweisen. Eine vorteilhafte Alternative sieht vor, dass die Pleuelstangen im Bereich des Pleuelauges einen Schlitz aufweisen, wodurch die Kugellager federnd umschlossen werden können. Ein Einspritzen der genannten Stützringe ist somit nicht erforderlich.

Weitere Merkmale, Vorteile und Anwendungsmöglichkeiten der Erfindung gehen aus der nachfolgenden Beschreibung mehrerer Ausführungsbeispiele sowie anhand der Zeichnung hervor.

Es zeigt:
- Figur 1: ein erste Ausführungsbeispiel eines erfindungsgemäßes Motor-Pumpenaggregat in räumlicher Darstellung;
- Figur 2: das Motor-Pumpenaggregat gemäß Fig. 1 im Längsschnitt durch eine erste Ebene;
- Figur 3: eine Teilansicht des Motor-Pumpenaggregates gemäß Fig. 1 im Längsschnitt durch eine zweite Ebene.
- Figur 4: ein zweites Ausführungsbeispiel eines erfindungsgemäßes Motor-Pumpenaggregat in räumlicher Darstellung;
- Figur 5: das Motor-Pumpenaggregat gemäß Fig. 4 im Längsschnitt durch eine erste Ebene;
- Figur 6: einen Arbeitraumdeckel des Motor-Pumpenaggregates gemäß Fig. 4 im Längsschnitt durch eine zweite Ebene und
- Figur 7: eine weitere Ausführungsform einer Pleuelstange eines erfindungsgemäßen Motor-Pumpenaggregates.

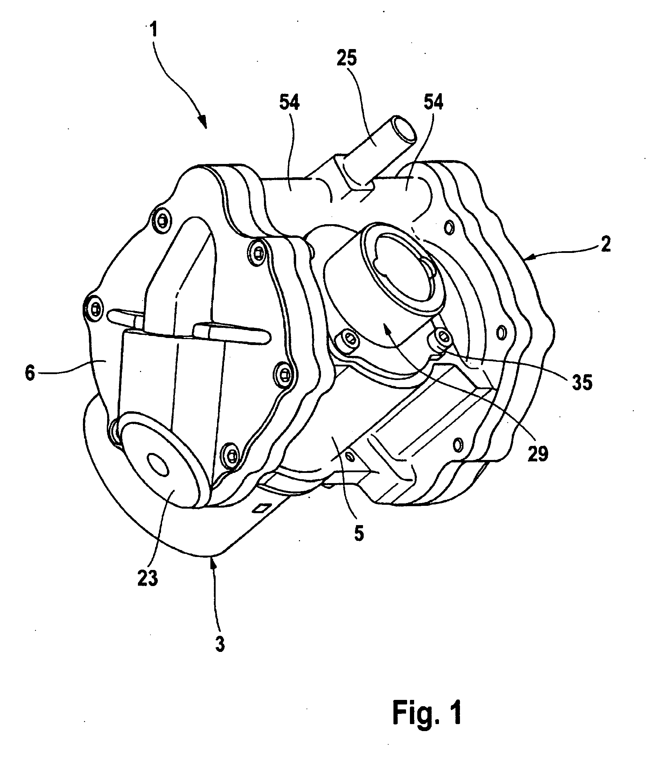

Fig. 1 zeigt ein erstes Ausführungsbeispiel eines erfindungsgemäßen Motor-Pumpenaggregats 1 in räumlicher Darstellung, das beispielsweise zur Bereitstellung von Vakuum für eine Bremsbetätigungseinrichtung einer Kraftfahrzeugbremsanlage mit einem nicht dargestellten pneumatischen Bremskraftverstärker vorgesehen ist. Das Motor-Pumpenaggregat 1 umfasst eine Pumpe 2 mit einem Pumpengehäuse 5 und einen die Pumpe 2 antreibenden elektrischen Motor 3, der beispielsweise als Gleichstrommotor ausgebildet sein kann.

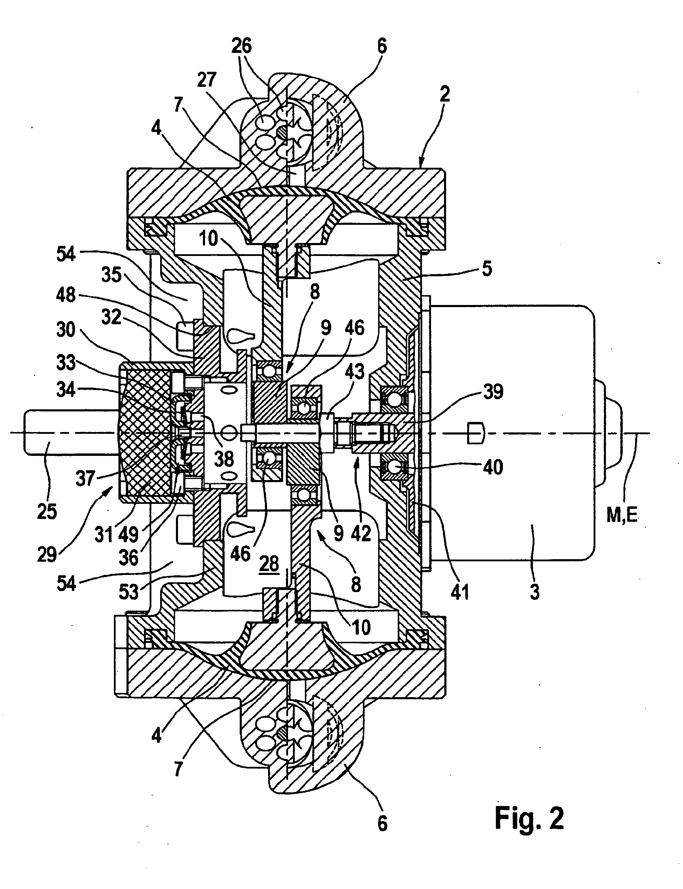

Die Pumpe 2 ist, wie insbesondere aus Fig. 2 hervorgeht, welche das Motor-Pumpenaggregat 1 im Längsschnitt durch eine erste Ebene zeigt, als Doppelmembranpumpe mit zwei gegenüberliegenden Arbeitsmembranen 4 vorgesehen, welche jeweils zwischen dem Pumpengehäuse 5 und einem Arbeitsraumdeckel 6 eingespannt ist und dadurch einen Arbeitsraum 7 begrenzt. Die Arbeitsmembrane 4 sind mittels eines Kurbelantriebs 8 gegensinnig bewegbar, welcher je Arbeitsmembran 4 einen Exzenter 9 und eine Pleuelstange 10 umfasst.

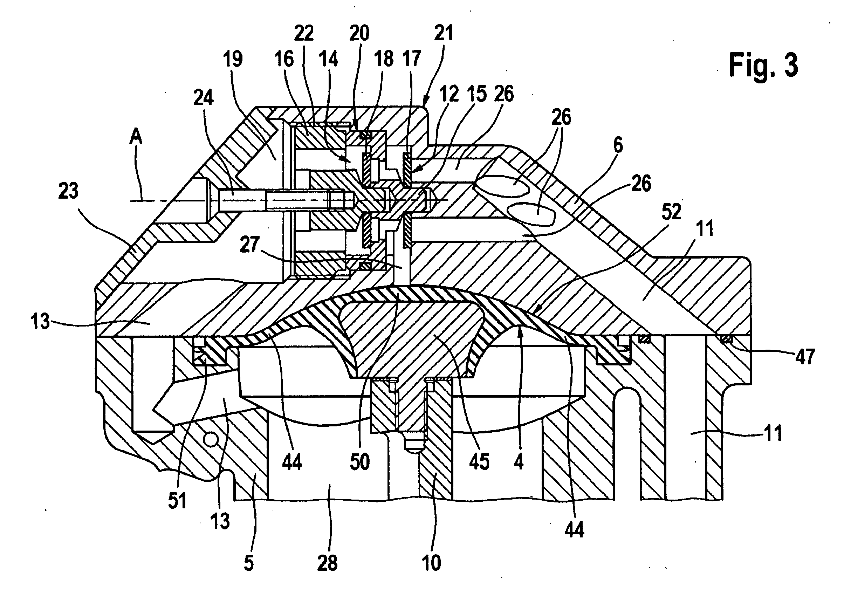

Wie Fig. 3 zu entnehmen ist, die eine Teilansicht des Motor-Pumpenaggregates 1 im Längsschnitt durch eine zweite Ebene dargestellt, ist jedem Arbeitsraum 7 jeweils ein Einlasskanal 11 mit einem Einlassventil 12 sowie ein Auslasskanal 13 mit einem Auslassventil 14 zugeordnet. Das Einlassventil 12 und das Auslassventil 14 sind als Rückschlagventil ausgebildet und umfassen jeweils eine Ventilaufnahme 15,16 sowie eine Ventilscheibe 17,18, wobei das Einlass- und das Auslassventil 12,14 jeweils als eine vormontierbare Ventileinheit 20 vorgesehen sind, welche in eine Ausnehmung 19 des Arbeitsraumdeckels 6 montierbar ist, um somit wiederum eine vormontierbare Arbeitsraumdeckeleinheit 21 zu schaffen. Die Ventileinheit 20 und die Arbeitsraumdeckeleinheit 21 können so als Baugruppe vormoniert werden, wodurch die Montage des Motor-Pumpenaggregates 1 vereinfacht wird.

Die Ventilaufnahme 15 des Einlassventils 12 weist einen zapfenförmigen Abschnitt auf, welcher nach der Montage der Ventileinheit 20 in den Arbeitsraumdeckel 6 in eine entsprechende Ausnehmung im Arbeitsraumdeckel 6 hineinragt. Durch diese Positionierung ist es möglich, die Montage der Ventileinheit 20 zu erleichtern. Wie ferner aus Fig. 3 hervorgeht, weist die Ventilaufnahme 16 des Auslassventils 14 ebenfalls einen zapfenförmigen Abschnitt auf, der nach der Baugruppenbildung in eine entsprechende Ausnehmung der Ventilaufnahme 15 des Einlassventils 12 hineinragt.

Die Ventileinheit 20 kann beispielsweise durch eine Gewindeverbindung 22 im Arbeitsraumdeckel 6 sicher befestigt werden. Weiter ist die Ausnehmung 19 mittels einer Ventilkappe 23 dicht verschlossen, welche durch ein Schraubenelement 24 an der Arbeitsraumdeckeleinheit 21 befestigt ist.

Die beiden Einlasskanäle 11 der beiden Arbeitsräume 7 sind über im Pumpengehäuse 5 verlaufende Kanäle 54 verbunden und münden in einen gemeinsamen Anschluss 25 im Pumpengehäuse 5, der wiederum über einen nicht dargestellten Vakuumschlauch mit einer Vakuumkammer des nicht dargestellten Bremskraftverstärkers verbunden ist, wobei der Anschluss 25 beispielsweise als Ansaugrohrstutzen ausgebildet sein kann, der im bzw. am Pumpengehäuse 5 luftdicht befestigt ist. Je nach Einbauverhältnissen im Kraftfahrzeug kann dieser Ansaugrohrstutzen gerade oder abgewinkelt ausgeführt werden und die luftdichte Befestigung im bzw. am Pumpengehäuse 5 kann drehbar oder fest gestaltet werden.

Wie den Fig. 2 und 3 zu entnehmen ist, kann sich gemäß dem dargestellten Ausführungsbeispiel ein Einlasskanal 11 zum Einlassventil 12 hin in mehrere kleinere Einlasskanäle 26 aufteilen, die kreisförmig um eine Mittelachse A der Ventileinheit 20 angeordnet sind und mittels einem einzigen Kanal 27 in den Arbeitsraum 7 münden.

Da das Volumen des Kanals 27 zum so genannten Schadvolumen zählt, d.h. dem beim Ausstoßen zurückbleibenden Restvolumen, ist nur ein einziger Kanal 27 vorgesehen, um das Schadvolumen zu minimieren.

Der Arbeitsraum 7, dessen Volumen in der gezeigten Stellung der Arbeitsmembran 4 sehr gering ist, d.h. vorzugsweise gegen Null geht, wird bei Drehung des Kurbelantriebs 8 vergrößert, wodurch der Druck im Arbeitsraum 7 so stark abnimmt, dass ein Teil der in der Vakuumkammer des Bremskraftverstärkers befindlichen Restluft über den Anschluss 25 und den Einlasskanal 11 in den Arbeitsraum 7 angesaugt wird. Durch den Ansaugvorgang öffnet sich die Ventilscheibe 17 des Einlassventils 12. Verkleinert sich der Arbeitsraum 7 durch die weitere Drehung des Kurbelantriebs 8, schließt das Einlassventil 12 und das Auslassventil 14 öffnet. Dabei wird die angesaugte Restluft aus dem Arbeitsraum 7 über den Kanal 27 und den Auslasskanal 13 heraus geblasen. Wie insbesondere Fig. 3 zu entnehmen ist, ist der Auslasskanal 13 derart im Arbeitsraumdeckel 6 und im Pumpengehäuse 5 angeordnet vorgesehen, dass die aus dem Arbeitsraum 7 verdrängte Luft in einen Innenraum 28 des Pumpengehäuses 5 geleitet wird.

Eine in dem Pumpengehäuse 5 vorgesehene Luftauslasseinheit 29 ermöglicht ein geräuscharmes Ausblasen der Luft aus dem Innenraum 28. Der Innenraum 28, auch Kurbelraum genannt, dient so als Schalldämpfungsraum. Die Luftauslasseinheit 29 enthält ein Rückschlagventil 49 umfassend einen ein- oder mehrteiligen Ventilkörper 34, das ein Zurückströmen von bereits ausgestoßener Luft sowie das Eindringen flüssiger oder gasförmiger Substanzen in den Kurbelraum 28 verhindert.

Zusätzlich wird der Luftschall beim Austreten der Luft aus dem Innenraum 28 dadurch vermindert, dass die Luftauslasseinheit 29 einen, in einem Filtergehäuse 30 angeordneten Filter 31 aufweist, durch welchen die Luft in die Atmosphäre austritt. Weiter umfasst die Luftauslasseinheit 29 einen Luftauslassdeckel 32, eine Luftauslassverschlusskappe 33 sowie den Ventilkörper 34 und kann als vormontierbare Baugruppe vorgesehen werden. Der Luftauslassdeckel 32, die Luftauslassverschlusskappe 33 und das Filtergehäuse 30 sind jeweils mit Schraubenelementen 35,36,37 befestigt. Zur Schalldämpfung können weitere Mittel vorgesehen sein, welche vorteilhafterweise in die Baugruppe Luftauslasseinheit 29 integriert sind.

Wenn der Luftdruck im Innenraum 28 der Pumpe 2 größer wird, als der die Pumpe 2 umgebende Atmosphärendruck, öffnet sich das Rückschlagventil 49, indem sich der Ventilkörper 34 von Durchgangsbohrungen 38 im Luftauslassdeckel 32 zumindest teilweise abhebt und die Luft durch nicht dargestellte Öffnungen in der Luftauslassverschlusskappe 33 und durch den Filter 31 aus dem Pumpengehäuse 5 in die Atmosphäre entweichen kann. Somit kann einerseits der Druck im Innenraum 28 der Pumpe 2 nur um den geringen, zum Öffnen des Rückschlagventils 49 notwendigen Differenzdruckwert über den Atmosphärendruck anwachsen und andererseits ist der Druck im Innenraum 28 periodischen Schwankungen im Takt der mit der Kurbelbewegung einhergehenden Innenraumvolumenänderung unterworfen. Dadurch ergibt sich ein zeitlich gemittelter Innenraumdruck unterhalb des Atmosphärendrucks.

Fig. 2 ist weiter zu entnehmen, dass eine Motorwelle 39 des elektrischen Motors 3 in einem ersten, nicht dargestellten, im Motor 3 angeordneten Lager und in einem zweiten Lager 40 gelagert ist, wobei das zweite Lager 40 zum Teil von einem Motorgehäuse 41 und zum Teil von dem Pumpengehäuse 5 aufgenommen wird, wobei ein Motorwellenende 42 in das Pumpengehäuse 5 hineinragt. Eine mit der Motorwelle 39 starr verbundene Exzenterwelle 43 trägt den Kurbelantrieb 8 mit den Exzentern 9 und den Pleuelstangen 10, wobei Mittelachsen M, E der Motorwelle 39 und der Exzenterwelle 43 fluchten. Auf eine zusätzliche Lagerung der Motorwelle 39 bzw. der Exzenterwelle 43 im Pumpengehäuse 5 kann verzichtet werden, weil die erwähnte Fixierung des zweiten Lagers 40 sowohl im Motorgehäuse 41 als auch im Pumpengehäuse 5 bereits die notwendige Zentrierung des Kurbelantriebs 8 innerhalb des Pumpengehäuses 5 sicherstellt. Als weitere Ausführungsform ist es denkbar, die Exzenterwelle 43 durch eine Verlängerung der Motorwelle 39 zu ersetzen, d.h. Motor- und Exzenterwelle 39,43 einteilig auszuführen.

Um einen ruhigen Lauf des Motor-Pumpenaggregats 1 zu gewährleisten, sind Mittelpunkte der Exzenter 9 bezogen auf die Mittelachse E der Exzenterwelle 43 diametral und mit gleichem Abstand angeordnet. Dadurch können die Reaktionskräfte der oszillierenden Massen von Arbeitsmembranen 4, Pleuelstangen 10 und Exzentern 9 nahezu ausgeglichen werden, da in jeder Phase ihrer Bewegung der gemeinsame Schwerpunkt zumindest näherungsweise in Ruhe bleibt. Die verbleibende kleine Abweichung von einem idealen Massenausgleich ist dadurch begründet, dass die beiden Exzenter 9, wie in Fig. 2 dargestellt, axial versetzt angeordnet sind, während sich die Arbeitsmembranen 4 auf gleicher axialer Höhe bewegen.

Vorteilhafterweise können die Exzenter 9 einstückig als Doppelexzenter ausgebildet sein, welcher beispielsweise durch Aufpressen auf die Exzenterwelle 43 angeordnet wird.

In einer weiteren vorteilhaften Ausführung wird der Doppelexzenter durch Einpressen der Exzenterwelle 43 in zwei scheibenförmig ausgebildete, um 180° zueinander verdrehte einzelne Exzenter 9 hergestellt.

Zur vereinfachten Montage des Motor-Pumpenaggregats 1 ist es vorteilhaft, die Exzenterwelle 43 und die Motorwelle 39 innerhalb des Pumpengehäuses 5 zusammenzufügen. Hierfür kann die Exzenterwelle 43 an ihrem motorseitigen Ende eine Gewindeverbindung in Form eines ein Innen- oder eines Außengewindes aufweisen. Um das Ansetzen eines Werkzeugs zum Anziehen der Gewindeverbindung zu ermöglichen, ist motorseitig oder am freien Wellenende wenigstens eine Werkzeugangriffsfläche vorgesehen. Eine mehrkantige Ausgestaltung des freien Endes ist hierfür ebenso denkbar.

Fig. 3 ist zu entnehmen, dass die Arbeitsmembran 4 den Arbeitsraum 7 vom Kurbelraum 28 trennt und fest mit einem Stößel 45 verbunden ist, wobei der vorzugsweise nicht deformierbare Stößel 45 von dem elastisch deformierbaren Werkstoff der Arbeitsmembran 4 umspritzt sein kann. Dadurch entsteht in der Umgebung des Stößels 45 ein schwer deformierbarer Abschnitt 50 im Zentrum der Arbeitsmembran 4, der nach außen in einen leicht deformierbaren Abschnitt 44 der Arbeitsmembran 4 übergeht, wobei dieser wiederum nach außen in einen Membranwulst 51 übergeht, der mit dem Pumpengehäuse 5 fest und luftdicht verbunden ist. Der Stößel 45 ist bei diesem Ausführungsbeispiel mittels einer Gewindeverbindung fest mit der Pleuelstange 10 verbunden. Der Stößel 45 kann jedoch gemäß einer weiteren Ausführungsform mit der Pleuelstange 10 einteilig vorgesehen sein. Sind der Stößel 45 und die Pleuelstange 10 als separate Bauteile vorgesehen, so sind diese je nach Werkstoff der Bauteile miteinander verschleißt oder verschraubt.

Die Pleuelstangen 10 sind mittels Kugellagern 46 auf den Exzentern 9 beweglich gelagert.

Um den Arbeitsraum 7 mit einem sehr geringen Restvolumen zu erhalten, weist der Arbeitsraumdeckel 6 eine dreidimensionale Formgebung auf, die an die Enveloppe einer arbeitsraumseitigen Membranoberfläche 52 angepasst ist, welche durch die Kippbewegung des vom Kurbelantrieb 8 bewegten Stößels 45 induziert wird. Vorzugsweise erfolgt die Anpassung der dreidimensionalen Arbeitsraumdeckelinnenkontur an die Enveloppe durch das Einhalten eines vorbestimmten kleinen Abstands zwischen den Bereichen des schwer deformierbaren Abschnitts 50 der Arbeitsmembran 4 und dem Arbeitsraumdeckel 6, während der Abstand in den Bereichen des leicht deformierbaren Abschnitts 44 der Arbeitsmembran 4 und des Membranwulstes 51 zum Arbeitsraumdeckel 6 zu Null gewählt wird. Der kleine Abstand der Arbeitsraumdeckelinnenkontur von der Enveloppe der arbeitsraumseitigen Membranoberfläche 52 im zentralen Bereich der Arbeitsmembran 4 verhindert dessen Anschlagen am Arbeitsraumdeckel 6 beim Betrieb der Pumpe 2 und ermöglicht auch im oberen Totpunkt des Kurbelantriebs 8 eine Luftströmung zwischen dem Arbeitsraum 7 und dem Kanal 27 im Arbeitsraumdeckel 6.

Weiter sind Mittel vorgesehen, um den Abstand der Arbeitsraumdeckel 6 von der Arbeitsmembran 4 einzustellen, wodurch Fertigungstoleranzen bzw. Montagetoleranzen ausgeglichen werden. Es ist vorgesehen, die Einstellung während der Endmontage des Motor-Pumpenaggregats 1 durchzuführen.

In einer Ausführungsform werden die Abstandseinstellmittel durch eine einstellbare Verbindung zwischen Pleuelstange 10 und Stößel 45 gebildet. Ein Beispiel für eine solche Verbindung ist eine Schweißverbindung. Ein anderes Beispiel ist eine Schraubverbindung mit eingelegten Unterlegscheiben.

Eine weitere Ausführungsform sieht die Abstandseinstellmittel als eine einstellbare Verbindung zwischen Pumpengehäuse 5 und Arbeitsraumdeckel 6 vor. Ein Beispiel für eine solche einstellbare Verbindung ist eine Schweißverbindung, ein anderes Beispiel ist eine Schraubverbindung von Pumpengehäuse 5 und Arbeitsraumdeckel 6, bei der über das Anzugsmoment der Verbindungsschrauben die Einspann-Deformation des zu diesem Zweck als Membranwulst 51 ausgebildeten Membranrands bestimmt wird.

Ein gewichtsoptimiertes Aggregat 1 erhält man dadurch, dass das Pumpengehäuse 5 und die Arbeitsraumdeckel 6 aus Kunststoff beispielsweise mittels Spritzgießen hergestellt sind, wobei die Bauteile vorzugsweise durch Ultraschallschweißen miteinander verbunden werden. Ferner können das Pumpengehäuse 5 und der Arbeitsraumdeckel 6 bzw, nur das Pumpengehäuse 5 aus Aluminium hergestellt sein, da Aluminium eine gute Wärmeableitung vom Motor 3 erlaubt. So ist eine Werkstoffkombination aus Kunststoff und Aluminium für die beiden Bauteile Pumpengehäuse 5 und Arbeitsraumdeckel 6 denkbar.

Vorteilhafterweise sind die Einlass- und Auslasskanäle 11,13 im Pumpengehäuse 5 derart positioniert, dass die beiden Arbeitsraumdeckel 6 identisch ausgestaltet werden können. Dabei weisen die Arbeitsraumdeckel 6 sowie das Pumpengehäuse 5 Mittel zur definierten Positionierung der Arbeitsraumdeckel 6 auf dem Pumpengehäuse 5 auf, um die Montage zu erleichtern und eine fehlerhafte Positionierung auszuschließen.

Zur Konkretisierung der Mittel zur definierten Positionierung können eine unsymmetrische Fügekontur, sowie Vorsprünge in der Verbindungsfläche vorgesehen werden. Bei einer Verbindung von Arbeitsraumdeckel 6 und Pumpengehäuse 5 durch Schrauben bietet sich als Positioniermittel ein unsymmetrisches Lochbild an.

Strömungskanäle, die die Verbindungsfläche zwischen Arbeitsraumdeckel 6 und Pumpengehäuse 5 durchdringen, sind in den Übergängen zwischen Arbeitsraumdeckel 6 und Pumpengehäuse 5 zu ihrer Umgebung hin gasdicht ausgebildet - beispielsweise durch, den Einsatz von Dichtelementen 47 mittels einer gasdichten Verschweißung.

Die oben beschriebene Luftauslasseinheit 29, im wesentlichen bestehend aus Filtergehäuse 30, Filter 31, Ventildeckel 32, Ventilverschlusskappe 33 und Ventilkörper 34 ist als vormontierbare Einheit ausgebildet und zum Einbau in einen Durchbruch 48 einer dem Motor 3 abgewandten Wand 53 des Pumpengehäuses 5 vorgesehen. Wie ersichtlich ist, wird die Anlage des beispielsweise scheibenförmigen Ventilkörpers 34 am Ventildeckel 32 mittels der Ventilverschlusskappe 33 erreicht. Dabei erfüllt der Durchbruch 48 vor dem Einsetzen der Luftauslasseinheit 29 die Funktion eines Montagefensters, das einen Zugang zum Innenraum 28 des Pumpengehäuses 5 gestattet.

Die Auslasskanäle 13 münden in den Innenraum 28 des Pumpengehäuse 5, so dass dieses als akustische Dämpfungskammer zur Minderung des Austrittsschalls beim Ausstoßen von Luft aus den Arbeitsräumen 7 dient.

Die Montage des erfindungsgemäßen Motor-Pumpenaggregats 1 erfolgt mit folgenden Arbeitsschritten:
1. Vormontieren der Baugruppen Motor 3, Arbeitsraumdeckeleinheiten 21 und Luftauslasseinheit 29
2. Vormontieren der Exzenterwelle 43 mit dem Doppelexzenter 9, gebildet durch die zwei um 180 Grad zueinander versetzten, Kugellager 46 tragende Exzenter 9, der motorseitigen Pleuelstange 10 und einer ersten, der motorseitigen Pleuelstange 10 zugeordneten Arbeitsmembran 4
3. Verbinden der in Schritt 2 erzeugten Baugruppe mit dem Motor 3 durch Verbinden der Exzenterwelle 43 mit der Motorwelle 39, wobei dieser Arbeitsschritt innerhalb des Pumpengehäuses 5 erfolgt. Als Montagefenster dienen hierfür die zur Aufnahme der Luftauslasseinheit 29 und der zweiten Arbeitsmembran 4 vorgesehenen Öffnungen des Pumpengehäuses 5.
4. Verbinden der zweiten Pleuelstange 10 mit der zweiten Arbeitsmembran 4
5. Einstecken der in Schritt 4 erzeugten Baugruppe in das Pumpengehäuse 5
6. Aufsetzen der zweiten Pleuelstange 10 auf das Kugellager 46 des luftauslassseitigen Exzenters 9
7. Befestigen des Motors 3 am Pumpengehäuse 5
8. Verbinden der Arbeitsraumdeckeleinheiten 21 mit dem Pumpengehäuse 5
9. Verschließen des Durchbruches 48 mittels der Luftauslasseinheit 29

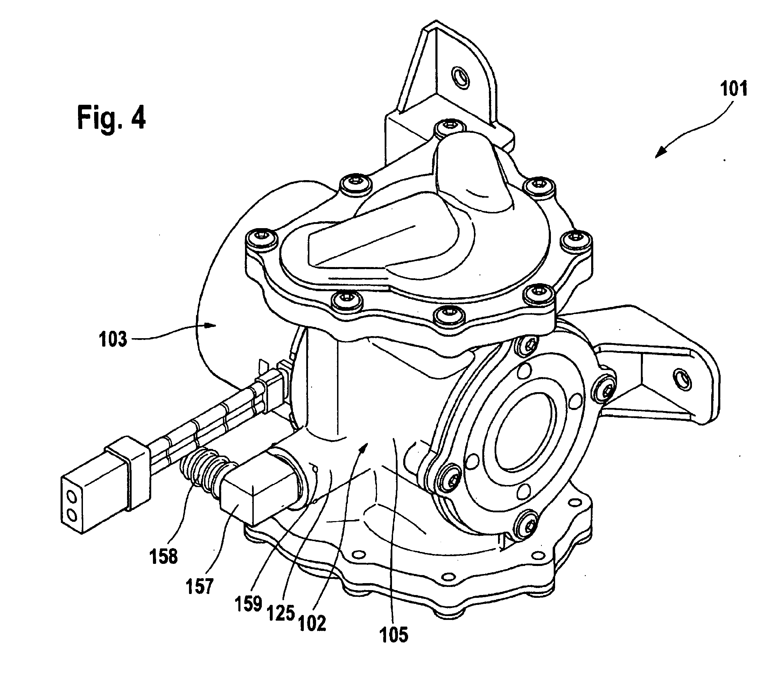

Die Fig. 4 bis 6 zeigen ein zweites Ausführungsbeispiel eines Motor-Pumpenaggregates 101. Der Aufbau und die Funktion stimmen weitgehend mit dem ersten Ausführungsbeispiel überein, so dass gleiche Bauteile bzw. Bauteile mit gleicher Funktion gleiche, um 100 erhöhte Bezugszeichen aufweisen.

Fig. 4 zeigt das zweite Ausführungsbeispiel des erfindungsgemäßen Motor-Pumpenaggregats 101 in räumlicher Darstellung, welches eine Pumpe 102 mit einem Pumpengehäuse 105 und einen die Pumpe 102 antreibenden elektrischen Motor 103 umfasst, wobei der Motor 103 beispielsweise als Gleichstrommotor ausgebildet sein kann.

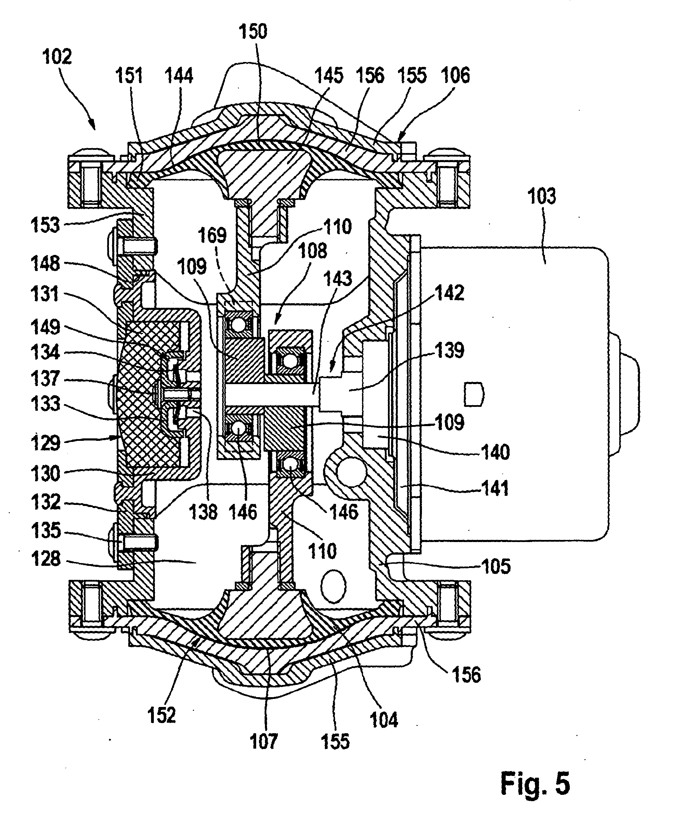

Die Pumpe 102 ist, wie insbesondere aus Fig. 5 hervorgeht, welche das Motor-Pumpenaggregat 101 im Längsschnitt durch eine erste Ebene zeigt, als Doppelmembranpumpe mit zwei gegenüberliegenden Arbeitsmembranen 104 vorgesehen, welche jeweils zwischen dem Pumpengehäuse 105 und einem Arbeitsraumdeckel 106 eingespannt ist und dadurch einen Arbeitsraum 107 begrenzt. Die Arbeitsmembrane 104 sind mittels eines Kurbelantriebs 108 gegensinnig bewegbar, welcher je Arbeitsmembran 104 einen Exzenter 109 und eine Pleuelstange 110 umfasst.

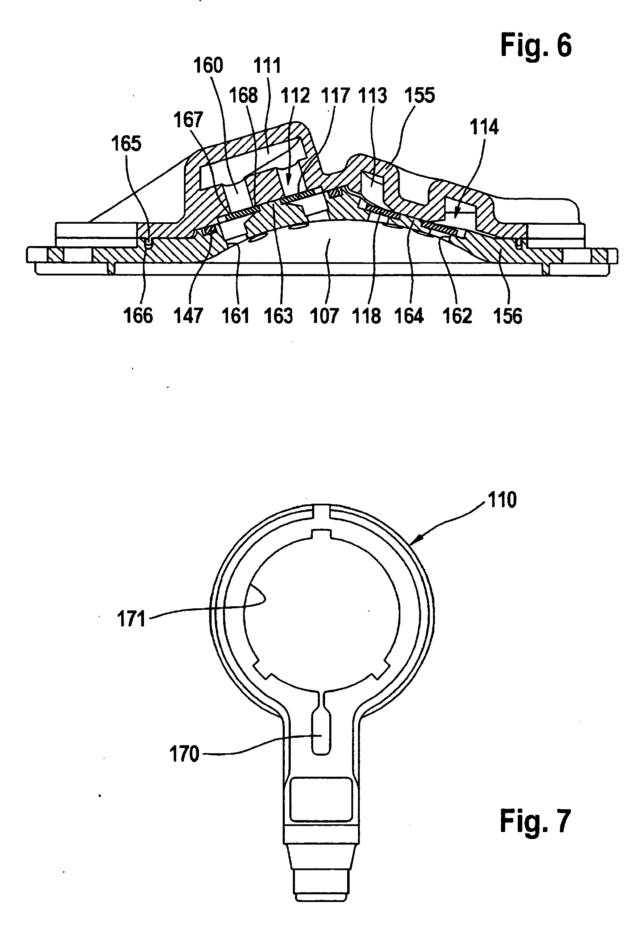

In Fig. 6 ist der Arbeitsraumdeckel 106 des Motor-Pumpenaggregates 101 geschnitten dargestellt. Es ist ersichtlich, dass der Arbeitsraumdeckel 106 einen Oberdeckel 155 sowie einen Unterdeckel 156 aufweist, die je nach Werkstoff - Kunststoff oder Aluminium - luftdicht miteinander verschweißt bzw. verschraubt sind. Die Zentrierung des Oberdeckels 155 auf dem Unterdeckel 156 erfolgt beispielsweise durch eine am Oberdeckel 155 angeformte Schweißzugabe 165, welche bei der Montage des Oberdeckels 155 in eine entsprechende Kontur 166 hineingreift.

Am Pumpegehäuse 105 ist ein in Fig. 4 gezeigter Anschluss 125 mit einem darin abdichtend befestigen Adapter 157 vorgesehen, über den der angeschlossene Bremskraftverstärker evakuiert wird. Der Adapter 157 kann beispielsweise wie dargestellt abgewinkelt ausgeführt sein. Ebenso ist jedoch auch, den Kundenwünschen entsprechend, ein gerader Adapter 157 möglich. Weiter ist die Ausgestaltung eines Adapterabganges 158, an welchen ein nicht gezeigter Vakuumschlauch befestigt wird, je nach Anschlussart unterschiedlich ausgestaltet. So ist neben dem dargstellten Tannenbaumprofil auch ein Schnell- bzw. Rastverschluss denkbar.

Der Adapter 157 kann entweder mittels einer Rastverbindung in den Anschluss 125 positioniert werden oder die Anschluss-Adapter-Verbindung ist drehbar vorgesehen. Die drehbare Ausgestaltung der Verbindung kann beispielsweise mittels stiftförmigen Elementen 159, welche in Bohrungen des Anschlusses 125 hineinragen und in eine nicht sichtbare Außennut des Adapters 157 eingreifen, realisiert werden.

Der Anschluss 125 mündet in eine nicht dargestellte Gehäusebohrung, die in zwei im Pumpengehäuse 105 ausgebildete Kanäle verzweigt, die zu den beiden Arbeitraumdeckeln 106 führen. Dadurch ist es möglich, die Arbeitsraumdeckel 106 für beide Seiten der Pumpe 102 gleich auszugestalten, wodurch die Montage wesentlich vereinfacht wird. Vorteilhafterweise kann ein zweiter Anschluss 125 auf der gegenüberliegenden Seite des Pumpengehäuses 105 vorgesehen sein. Damit ist es möglich, je nach Kundenwunsch und Einbauverhältnisse des Motor-Pumpenaggregates 101 den Adapter 157 entweder auf der einen oder der gegenüberliegenden Seite anzuschließen. Hierzu kann einer der Anschlüsse 125 mittels eines Stopfens dicht verschlossen werden. Ebenso ist es denkbar, einen der Anschlüsse 125 bei der Herstellung verschlossen zu lassen und erst bei Bedarf beispielsweise durch Aufbohren zu öffnen.

In jedem der Arbeitsraumdeckel 106 ist ein im Oberdeckel 155 ausgebildete Einlasskanal 111 vorgesehen, der mit dem erwähnten Pumpengehäusekanal mittels einem Dichtelement luftdicht verbunden ist und die angesaugte Luft zu einem Einlassventil 112 weiterleitet. Das Einlassventil 112 ist vorzugsweise als Plattenventil mit einer Ventilscheibe 117 aus elastischem Werkstoff ausgebildet. Die von der elastomeren Ventilscheibe 117 zu bedeckende Gesamtdurchtrittsfläche wird dabei zweckmäßigerweise in mehrere kleine Durchtrittsflächen mit jeweils kreisförmigem Querschnitt aufgeteilt. Hierfür verzweigt der Einlasskanal 111 im Oberdeckel 155 in eine entsprechende Anzahl von Einzelkanälen 160, welche kreisringförmig um eine Mittelachse des Einlassventils 111 angeordnet sind.

Nach dem Durchströmen des Einlassventils 112 gelangt die angesaugte Luft über Arbeitsraumdeckelöffnungen 161 im Unterdeckel 156 in den Arbeitsraum 107 zwischen Membrane 104 und Arbeitsraumdeckel 106, wird dort komprimiert und über weitere Arbeitsraumdeckelöffnungen 162 zum Auslassventil 114 geführt, welches ebenfalls als Plattenventil mit einer Ventilscheibe 118 aus elastomeren Werkstoff ausgebildet ist. Wie ersichtlich ist, ist ein Auslasskanal 113 zwischen Oberdeckel 155 und Unterdeckel 156 ausgebildet.

Um den Arbeitsraum 107 mit einem sehr geringen Restvolumen zu erhalten, weist der Arbeitsraumdeckel 106 auch bei diesem Ausführungsbeispiel eine dreidimensionale Formgebung auf, die an die Enveloppe einer arbeitsraumseitigen Membranoberfläche 152 angepasst ist, welche durch die Kippbewegung eines vom Kurbelantrieb 108 bewegten Stößels 145 induziert wird. Vorzugsweise erfolgt die Anpassung der dreidimensionalen Arbeitsraumdeckelinnenkontur an die Enveloppe durch das Einhalten eines vorbestimmten kleinen Abstands zwischen den Bereichen eines schwer deformierbaren Abschnitts 150 der Arbeitsmembran 104 und dem Arbeitsraumdeckel 106, während der Abstand in den Bereichen eines leicht deformierbaren Abschnitts 144 der Arbeitsmembran 104 und eines Membranwulstes 151 zu Null gewählt wird. Der kleine Abstand der Arbeitsraumdeckelinnenkontur von der Enveloppe der arbeitsraumseitigen Membranoberfläche 152 im zentralen Bereich der Membran 104 verhindert dessen Anschlagen am Arbeitsraumdeckel 106 beim Betrieb der Pumpe 102 und ermöglicht auch im oberen Totpunkt des Kurbelantriebs 108 eine Luftströmung zwischen dem Arbeitsraum 107 und den Arbeitsraumdeckeöffnungen 161,162.

Die Arbeitsraumdeckelöffnungen 161,162 zählen zum sogenannten Schadvolumen, d.h. dem beim Ausstoßen zurückbleibenden Restvolumen. Die darin verbleibende Luft unter Atmosphärendruck dehnt sich beim Ansaugvorgang aus, wodurch weniger Volumen angesaugt werden kann. Es ist daher sinnvoll, die Arbeitsraumdeckelöffnungen 161,162 mit möglichst geringem Volumen auszugestalten.

Ein- und Auslassventil 112,114 sind daher tangential zur Arbeitsraumdeckelinnenkontur, d.h. schräg zu den Symmetrieebenen der Pumpe 102, angeordnet und die Arbeitsraumdeckelöffnungen 161,162 sind als kurze Bohrungen ausgebildet. Diese Ausgestaltung der Arbeitsraumdeckel 106 nimmt als weiteren Vorteil einen geringen Bauraum in Anspruch.

Vom Auslassventil 114 wird die ausgestoßene Luft über den Auslasskanal 113 im Arbeitsraumdeckel 106 zu einem nicht dargestellten Auslasskanal im Pumpengehäuse 105 geleitet. Die Auslasskanäle 113 in Arbeitsraumdeckel 106 und Pumpengehäuse 105 sind luftdicht mittels eines Dichtelements verbunden. Die beiden Auslasskanäle im Pumpengehäuse 105 münden in einen Innenraum 128 des Pumpengehäuses 105, dem so genannten Kurbelraum.

Zur erleichtern Montage der Ventilscheiben 117,118 weist der Unterdeckel 156 im Bereich der Ventile 112,114 jeweils ein Positionierungszapfen 163,164 auf, welcher der Führung der Ventilscheiben 117,118 dient.

Das Einlassventil 112 weist weiter zwei am Oberdeckel 155 vorgesehene koaxiale kreisförmige Dichtflächen 167,168 auf, welche als umlaufender Vorsprünge ausgestaltet sind, wobei eine Dichtfläche 167 außerhalb der Einzelkanäle 160 und eine Dichtfläche 168 innerhalb der Einzelkanäle 160 angeordnet ist. Durch diese Verkleinerung der Dichtfläche wird eine größere Dichtwirkung erzielt und ein Ankleben der Ventilscheibe 117 am Oberdeckel 155, insbesondere bei tiefen Temperaturen, ist ausgeschlossen.

Eine in dem Pumpengehäuse 105 vorgesehene Luftauslasseinheit 129 ermöglicht ein geräuscharmes Ausblasen der Luft aus dem Innenraum 128. Der Innenraum 128, auch Kurbelraum genannt, dient so als Schalldämpfungsraum. Die Luftauslasseinheit 129 umfasst, wie bereits zum ersten Ausführungsbeispiel beschrieben, ein Rückschlagventil 149 umfassend einen ein- oder mehrteiligen Ventilkörper 134, das ein Zurückströmen von bereits ausgestoßener Luft sowie das Eindringen flüssiger oder gasförmiger Substanzen in den Kurbelraum 128 verhindert.

Zusätzlich wird der Luftschall beim Austreten der Luft aus dem Innenraum 128 dadurch vermindert, dass die Luftauslasseinheit 129 einen, in einem Filtergehäuse 130 angeordneten Filter 131 aufweist, durch welchen die Luft in die Atmosphäre austritt. Weiter umfasst die Luftauslasseinheit 129 einen Luftauslassdeckel 132, eine Luftauslassverschlusskappe 133 sowie den Ventilkörper 134 und kann als vormontierbare Baugruppe vorgesehen werden. Der Luftauslassdeckel 132, die Luftauslassverschlusskappe 133 und das Filtergehäuse 130 sind jeweils mit Schraubenelementen 135,137 befestigt. Wie ersichtlich ist, ist das Filtergehäuse 130 mit dem Luftauslassdeckel 132 vernietet. Zur Schalldämpfung können weitere Mittel vorgesehen sein, welche vorteilhafterweise in die Baugruppe Luftauslasseinheit 129 integriert sind.

Wenn der Luftdruck im Innenraum 128 der Pumpe größer wird, als der die Pumpe umgebende Atmosphärendruck, öffnet sich das Rückschlagventil 149, indem sich der Ventilkörper 134 von Durchgangsbohrungen 138 im Luftauslassdeckel 132 zumindest teilweise abhebt, und die Luft durch nicht dargestellte Öffnungen in der Luftauslassverschlusskappe 133 und durch den Filter 131 aus dem Pumpengehäuse 105 in die Atmosphäre entweichen kann. Somit kann einerseits der Druck im Innenraum 128 der Pumpe 102 nur um den geringen, zum Öffnen des Rückschlagventils 149 notwendigen Differenzdruckwert über den Atmosphärendruck anwachsen und andererseits ist der Druck im Innenraum 128 periodischen Schwankungen im Takt der mit der Kurbelbewegung einhergehenden Innenraumvolumenänderung unterworfen. Dadurch ergibt sich ein zeitlich gemittelter Innenraumdruck unterhalb des Atmosphärendrucks.

Aus Fig. 5 ist weiter zu entnehmen, dass eine Motorwelle 139 des elektrischen Motors 103 in einem ersten, nicht dargestellten, im Motor 3 angeordneten Lager und in einem zweiten Lager 140 gelagert ist, wobei das zweite Lager 140 zum Teil von einem Motorgehäuse 141 und zum Teil von dem Pumpengehäuse 105 aufgenommen wird. Dadurch wird eine vorteilhafte Zentrierung von Motor 103 und Pumpe 102 erreicht. Die Befestigung des Motors 103 am Pumpengehäuse 105 erfolgt mittels nicht gezeigten Schraubelementen, welche in im Pumpengehäuse 105 eingebrachte Gewindeeinsätze eingreifen, wenn das Pumpengehäuse 105 aus Kunststoff ausgebildet ist.

Die Motorwelle 139 dient bei diesem Ausführungsbeispiel gleichzeitig als Exzenterwelle 143, welche den Kurbelantrieb 108 mit den Exzentern 109 und den Pleuelstangen 110 trägt. Es ist jedoch auch eine separate Ausführung von Motorwelle 139 und Exzenterwelle 143 gemäß dem ersten Ausführungsbeispiel beschrieben möglich.

Um einen ruhigen Lauf des Motor-Pumpenaggregats 101 zu gewährleisten, sind Mittelpunkte der Exzenter 109 bezogen auf eine Mittelachse der Motorwelle 139 diametral und mit gleichem Abstand angeordnet, d.h. die Exzenter 109 sind um 180° versetzt. Dadurch können die Reaktionskräfte der oszillierenden Massen von Arbeitsmembranen 104, Pleuelstangen 110 und Exzentern 109 nahezu ausgeglichen werden, da in jeder Phase ihrer Bewegung der gemeinsame Schwerpunkt zumindest näherungsweise in Ruhe bleibt. Die verbleibende kleine Abweichung von einem idealen Massenausgleich ist dadurch begründet, dass die beiden Exzenter 109, wie in Fig. 5 dargestellt, axial versetzt angeordnet sind, während sich die Arbeitsmembranen 104 auf gleicher axialer Höhe bewegen.

Die Exzenter 109 können beispielsweise auch um 90° gegeneinander versetzt sein, wobei der Versatz um 90°ein geringeres Drehmoment bewirkt und sich damit positiv auf die Geräuschentwicklung sowie den Anlauf der Pumpe 102 auswirkt.

Fig. 5 ist weiter zu entnehmen, dass die Arbeitsmembran 104 den Arbeitsraum 107 vom Kurbelraum 128 trennt und fest mit dem Stößel 145 verbunden ist, wobei der vorzugsweise nicht deformierbare Stößel 145 von dem elastisch deformierbaren Werkstoff der Membran 104 umspritzt sein kann. Dadurch entsteht in der Umgebung des Stößels 145 der bereits erwähnte, schwer deformierbarer Abschnitt 150 im Zentrum der Arbeitsmembran 104, der nach außen in den leicht deformierbaren Abschnitt 144 der Arbeitsmembran 104 übergeht, wobei dieser wiederum nach außen in einen Membranwulst 151 übergeht, der mit dem Pumpengehäuse 105 fest und luftdicht verbunden ist. Der Stößel 145 kann entweder mittels einer Schweiß- oder einer Gewindeverbindung fest mit der Pleuelstange 110 verbunden sein. Er kann jedoch ebenso mit der Pleuelstange 110 einteilig vorgesehen sein. Die Pleuelstangen 110 sind mittels Kugellagern 146 auf den Exzentern 109 beweglich gelagert.

Sind die Pleuelstangen 110 aus Kunststoff vorgesehen, können eingespritzte Stützringe 169 im Bereich eines Pleuelauges 171 den Sitz der Kugellager 146 im den Pleuelstangen 110 stabilisieren. Alternativ können in den Pleuelstangen 110 im Bereich des Pleuelauges 171 eingeformte Schlitze 170 die Kugellager 146 federnd umschließen, wie aus Fig. 7 hervorgeht, welche eine weitere Ausführungsform einer Pleuelstange 110 zeigt.

Auch bei diesem Ausführungsbeispiel sind Mittel vorgesehen, um den Abstand der Arbeitsraumdeckel 106 von der Arbeitsmembrane 104 einzustellen, wodurch Fertigungstoleranzen bzw. Montagetoleranzen ausgeglichen werden. Es ist vorgesehen, die Einstellung während der Endmontage des Motor-Pumpenaggregats 101 durchzuführen.

In einer Ausführungsform werden die Abstandseinstellmittel durch eine einstellbare Verbindung zwischen Pleuelstange 110 und Stößel 145 gebildet. Ein Beispiel für eine solche Verbindung ist eine Schweißverbindung. Ein anderes Beispiel ist eine Schraubverbindung mit eingelegten Unterlegscheiben.

Eine weitere Ausführungsform sieht auch bei diesem Ausführungsbeispiel die Abstandseinstellmittel als eine einstellbare Verbindung zwischen Pumpengehäuse 105 und Arbeitsraumdeckel 106 vor. Ein Beispiel für eine solche einstellbare Verbindung ist eine Schweißverbindung, ein anderes Beispiel ist eine Schraubverbindung von Pumpengehäuse 105 und Arbeitsraumdeckel 106, bei der über das Anzugsmoment der Verbindungsschrauben die Einspann-Deformation des zu diesem Zweck als Membranwulst 151 ausgebildeten Membranrands bestimmt wird.

Ein gewichtsoptimiertes Aggregat 101 erhält man dadurch, dass das Pumpengehäuse 105 und die Arbeitsraumdeckel 106 aus Kunststoff beispielsweise mittels Spritzgießen hergestellt sind, wobei einzelne, durch Spritzguss hergestellte Teile vorzugsweise durch Ultraschallschweißen miteinander verbunden werden. Ferner können das Pumpengehäuse 105 und der Arbeitsraumdeckel 106 bzw. nur das Pumpengehäuse 105 aus Aluminium hergestellt sein, da Aluminium eine gute Wärmeableitung vom Motor 103 erlaubt. So ist eine Werkstoffkombination aus Kunststoff und Aluminium für die beiden Teile denkbar.

Vorteilhafterweise sind die Einlass- und Auslasskanäle 111,113 im Pumpengehäuse 105 derart positioniert, dass die beiden Arbeitsraumdeckel 106 identisch ausgestaltet werden können. Dabei weisen die Arbeitsraumdeckel 106 sowie das Pumpengehäuse 105 Mittel zur definierten Positionierung der Arbeitsraumdeckel 106 auf dem Pumpengehäuse 105 auf, um die Montage zu erleichtern und eine fehlerhafte Positionierung auszuschließen.

Zur Konkretisierung der Mittel zur definierten Positionierung können eine unsymmetrische Fügekontur, sowie Vorsprünge in der Verbindungsfläche vorgesehen werden. Bei einer Verbindung von Arbeitsraumdeckel 106 und Pumpengehäuse 105 durch Schrauben bietet sich als Positioniermittel ein unsymmetrisches Lochbild an.

Strömungskanäle, die die Verbindungsfläche zwischen Arbeitsraumdeckel 106 und Pumpengehäuse 105 durchdringen, sind in den Übergängen zwischen Arbeitsraumdeckel 106 und Pumpengehäuse 105 zu ihrer Umgebung hin gasdicht ausgebildet - beispielsweise durch den Einsatz von Dichtelementen 147 mittels einer gasdichten Verschweißung.

Die oben beschriebene Luftauslasseinheit 129, im wesentlichen bestehend aus Filtergehäuse 130, Filter 131, Ventildeckel 132, Ventilverschlusskappe 133 und Ventilkörper 134 ist als vormontierbare Einheit ausgebildet und zum Einbau in einen Durchbruch 148 einer dem Motor 103 abgewandten Wand 153 des Pumpengehäuses 105 vorgesehen. Wie ersichtlich ist, wird die Anlage des beispielsweise scheibenförmigen Ventilkörpers 134 am Ventildeckel 132 mittels der Ventilverschlusskappe 133 erreicht. Dabei erfüllt der Durchbruch 148 vor dem Einsetzen der Luftauslasseinheit 129 die Funktion eines Montagefensters, das einen Zugang zum Innenraum 128 des Pumpengehäuses 105 gestattet.

Die Auslasskanäle 113 münden in den Innenraum 128 des Pumpengehäuses 105, so dass dieses als akustische Dämpfungskammer zur Minderung des Austrittsschalls beim Ausstoßen von Luft aus den Arbeitsräumen 107 dient.

Die Montage des erfindungsgemäßen Motor-Pumpenaggregats 1 erfolgt mit folgenden Arbeitsschritten:
1. Vormontieren der Baugruppen Motor 103 und Luftauslasseinheit 129.
2. Einsetzen des Motors 103 in das Pumpengehäuse 105
3. Montieren der Doppelexzenter 109, gebildet durch die zwei um 180 Grad zueinander versetzten, Kugellager 146 tragende Exzenter 109, der motorseitigen Pleuelstange 110 und einer ersten, der motorseitigen Pleuelstange 110 zugeordneten Arbeitsmembran 104, wobei dieser Arbeitsschritt innerhalb des Pumpengehäuses 105 erfolgt. Als Montagefenster dienen hierfür die zur Aufnahme der Luftauslasseinheit 129 und der zweiten Arbeitsmembran 104 vorgesehenen Öffnungen des Pumpengehäuses 105.
4. Verbinden der zweiten Pleuelstange 110 mit der zweiten Arbeitsmembran 104
5. Einstecken der in Schritt 4 erzeugten Baugruppe in das Pumpengehäuse 105
6. Aufsetzen der zweiten Pleuelstange 110 auf das Kugellager 146 des luftauslassseitigen Exzenters 109
7. Befestigen des Motors 103 am Pumpengehäuse 105
8. Verschließen des Durchbruches 148 mittels der Luftauslasseinheit 129

Die Ansteuerung der zu den Ausführungsbeispielen beschriebenen Motor-Pumpenaggregate 1,101 erfolgt durch eine nicht gezeigte elektronische Steuereinheit (ECU) in Abhängigkeit von einem Signal eines Sensors, welcher einen Druckunterschied zwischen der Vakuumkammer und einer Arbeitskammer oder den absoluten Druck in der Vakuumkammer des Bremskraftverstärkers erfasst. Dabei wird das Motor-Pumpenaggregat 101 eingeschaltet, wenn das Signal einen ersten bestimmten, unteren Wert unterschreitet und ausgeschaltet, wenn das Signal einen zweiten bestimmten, oberen Wert überschreitet. Die Steuereinheit kann in eine elektronische Steuereinheit ECU - beispielsweise die des Bremssystems - integriert oder als separate Steuereinheit vorgesehen sein.

Um auch bei einem Ausfall von Teilen der Ansteuerung wie beispielsweise der elektronischen Steuereinheit das zum Erzielen einer Bremskraftverstärkung notwendige Evakuieren der Vakuumkammer des Vakuumbremskraftverstärkers zu gewährleisten, ist vorgesehen, die Ansteuerung so auszuführen, dass das Motor-Pumpenaggregat 1,101 bei aktiviertem Fahrzeug ("Zündung ein") und inaktiver elektronischer Steuereinheit voll bestromt wird.

Die erfindungsgemäßen Motor-Pumpenaggregate 1,101 finden insbesondere Anwendung in Kraftfahrzeugen mit Vakuumbremskraftverstärker und ersetzen die bisher übliche Vakuumversorgung mittels Saugvakuum bzw. verbrennungsmotorgetriebener Vakuumpumpe. Dieser Technologiewandel ist durch folgende Fakten begründet:
- Moderne Verbrennungsmotoren können weniger oder kein Saugvakuum liefern, weil die Entwickler von Verbrennungsmotoren bestrebt sind, Drosselverluste zu vermindern und daher die Vakuumhöhe absenken und weil die über den Vakuumanschluss in den Ansaugtrakt eingebrachte Nebenluft die Abgasregelung des Verbrennungsmotors durcheinander bringt.
- Die immer mehr Verbreitung findenden Verbrennungsmotoren mit Direkteinspritzung erzeugen prinzipbedingt kein Vakuum und werden daher in Stand der Technik mit direkt verbrennungsmotorgetriebenen Vakuumpumpen bestückt, wobei diese meistens an eine Nockenwelle angeschlossen werden.
- Eine direkt verbrennungsmotorgetriebenen Vakuumpumpe verursacht einen permanenten Leistungsverlust, solange der Verbrennungsmotor läuft - auch dann wenn das Vakuum bereits die benötigte Höhe erreicht hat. Es ist energetisch günstiger, eine Vakuumpumpe elektrisch anzutreiben und beim Erreichen des gewünschten Vakuumniveaus auszuschalten.
- In Hybridfahrzeugen mit einem Elektromotor und einem Verbrennungsmotor, ergeben sich Betriebszustände, bei denen der Verbrennungsmotor inaktiv ist und kein Vakuum für den Bremskraftverstärker liefert und daher ein Motor-Pumpenaggregat 1 erforderlich ist.
- In reinen Elektrofahrzeugen steht als einzige Energiequelle zur Erzeugung von Vakuum elektrische Energie zur Verfügung.

Die vorstehend beschriebenen erfindungsgemäßen Motor-Pumpenaggregate 1,101 sind nicht auf den beschriebenen Anwendungsfall der Bereitstellung von Vakuum beschränkt. Derartige Aggregate 1,101 können überall dort eingesetzt werden, wo Gase mit hohem Wirkungsgrad und mit geringen Geräuschemissionen von einem ersten Druckniveau auf ein höheres zweites Druckniveau gebracht werden sollen. Beispielsweise ist auch eine Anwendung des erfindungsgemäßen Aggregates 1,101 als Kompressor denkbar, wobei in dieser Anwendung vorzugsweise die Einbaurichtung der Ventile umgedreht wird, so dass das Ansaugen der Luft aus dem Innenraum 28,128 des Pumpengehäuses 5,105 und das Abgeben von komprimierter Luft über den Anschluss 25,125 erfolgt.

### Bezugszeichenliste

- 1: Motor-Pumpenaggregat
- 2: Pumpe
- 3: Motor
- 4: Arbeitsmembran
- 5: Pumpengehäuse
- 6: Arbeitsraumdeckel
- 7: Arbeitsraum
- 8: Kurbelantrieb
- 9: Exzenter
- 10: Pleuelstange
- 11: Einlasskanal
- 12: Einlassventil
- 13: Auslasskanal
- 14: Auslassventil
- 15: Ventilaufnahme
- 16: Ventilaufnahme
- 17: Ventilscheibe
- 18: Ventilscheibe
- 19: Ausnehmung
- 20: Ventileinheit
- 21: Arbeitsraumdeckeleinheit
- 22: Gewindeverbindung
- 23: Ventilkappe
- 24: Schraubenelement
- 25: Anschluss
- 26: Einlasskanal
- 27: Kanal
- 28: Innenraum
- 29: Luftauslasseinheit
- 30: Filtergehäuse
- 31: Filter
- 32: Luftauslassdeckel
- 33: Luftauslassverschlusskappe
- 34: Ventilkörper
- 35: Schraubenelement
- 36: Schraubenelement
- 37: Schraubenelement
- 38: Durchgangsbohrung
- 39: Motorwelle
- 40: Lager
- 41: Motorgehäuse
- 42: Motorwellenende
- 43: Exzenterwelle
- 44: Abschnitt
- 45: Stößel
- 46: Kugellager
- 47: Dichtelement
- 48: Durchbruch
- 49: Rückschlagventil
- 50: Abschnitt
- 51: Membranwulst
- 52: Membranoberfläche
- 53: Wand
- 54: Kanal

- 101: Motor-Pumpenaggregat
- 102: Pumpe
- 103: Motor
- 104: Arbeitsmembran
- 105: Pumpengehäuse
- 106: Arbeitsraumdeckel
- 107: Arbeitsraum
- 108: Kurbelantrieb
- 109: Exzenter
- 110: Pleuelstange
- 111: Einlasskanal
- 112: Einlassventil
- 113: Auslasskanal
- 114: Auslassventil

- 117: Ventilscheibe
- 118: Ventilscheibe

- 125: Anschluss

- 128: Innenraum
- 129: Luftauslasseinheit
- 130: Filtergehäuse
- 131: Filter
- 132: Luftauslassdeckel
- 133: Luftauslassverschlusskappe
- 134: Ventilkörper
- 135: Schraubenelement

- 137: Schraubenelement
- 138: Durchgangsbohrung
- 139: Motorwelle
- 140: Lager
- 141: Motorgehäuse
- 142: Motorwellenende
- 143: Exzenterwelle
- 144: Abschnitt
- 145: Stößel
- 146: Kugellager
- 147: Dichtelement
- 148: Durchbruch
- 149: Rückschlagventil
- 150: Abschnitt
- 151: Membranwulst
- 152: Membranoberfläche
- 153: Wand

- 155: Oberdeckel
- 156: Unterdeckel
- 157: Adapter
- 158: Adapterabgang
- 159: Element
- 160: Einzelkanal
- 161: Arbeitsraumdeckelöffnung
- 162: Arbeitsraumdeckelöffnung
- 163: Positionierungszapfen
- 164: Positionierungszapfen
- 165: Schweißzugabe
- 166: Kontur
- 167: Dichtfläche
- 168: Dichtfläche
- 169: Stützring
- 170: Schlitz
- 171: Pleuelauge

- A: Mittelachse
- E: Mittelachse
- M: Mittelachse

## Patentansprüche

1. Motor-Pumpenaggregat (1,101) zur Bereitstellung von Druck für eine Bremsbetätigungseinrichtung einer Kraftfahrzeugbremsanlage mit einem Vakuumbremskraftverstärker, umfassend eine Pumpe (2,102) und einen die Pumpe (2,102) antreibenden elektrischen Motor (3,103), wobei die Pumpe (2,102) als Doppelmembranpumpe mit zwei gegenüberliegenden Arbeitsmembranen (4,104) vorgesehen ist, welche jeweils zwischen einem Pumpengehäuse (5,105) und einem Arbeitsraumdeckel (6,106) eingespannt ist und **dadurch** einen Arbeitsraum (7,107) begrenzt und welche mittels eines, Exzenter (9,109) und Pleuelstangen (10,110) aufweisenden Kurbelantriebs (8,108) bewegbar sind, wobei dem Arbeitsraum (7,107) jeweils ein Einlasskanal (11,111) mit Einlassventil (12,112) und ein Auslasskanal (13,113) mit Auslassventil (14,114) zugeordnet ist, **dadurch gekennzeichnet, dass** die Auslasskanäle (13,113) in den Arbeitsraumdeckeln (6,106) und im Pumpengehäuse (5,105) derart angeordnet vorgesehen sind, dass aus den Arbeitsräumen (7,107) verdrängte Luft in einen den Kurbelantrieb (8,108) umgebenden Innenraum (28,128) des Pumpengehäuses (5,105) geleitet wird, und dass eine Luftauslasseinheit (29,129) vorgesehen ist, welche ein geräuscharmes Ausblasen der Luft aus dem Innenraum (28,128) ermöglicht.

2. Motor-Pumpenaggregat nach Anspruch 1, **dadurch gekennzeichnet, dass** die Luftauslasseinheit (29,129) Mittel zur Schalldämpfung aufweist.

3. Motor-Pumpenaggregat nach Anspruch 2, **dadurch gekennzeichnet, dass** die Luftauslasseinheit (29,129) einen Durchbruch (48,148) einer Wand (53,153) des Pumpengehäuses (5,105) dichtend verschließt.

4. Motor-Pumpenaggregat nach Anspruch 3, **dadurch gekennzeichnet, dass** die Luftauslasseinheit (29) ein Filtergehäuse (30), ein Filter (31), ein Luftauslassdeckel (32), eine Luftauslassverschlusskappe (33) sowie eine Ventilkörper (34) umfasst und als vormontierbare Baugruppe vorgesehen ist.

5. Motor-Pumpenaggregat nach Anspruch 4, **dadurch gekennzeichnet, dass** der Luftauslassdeckel (32), die Luftauslassverschlusskappe (33) sowie der Ventilkörper (34) ein Rückschlagventil (49) bilden.

6. Motor-Pumpenaggregat nach Anspruch 4, **dadurch gekennzeichnet, dass** das Filtergehäuse (130), die Luftauslassverschlusskappe (133) sowie der Ventilkörper (134) ein Rückschlagventil (149) bilden.

7. Motor-Pumpenaggregat nach Anspruch 5, **dadurch gekennzeichnet, dass** das Filtergehäuse (130) mit dem Luftauslassdeckel (132) vernietet ist.

8. Motor-Pumpenaggregat nach einem der Ansprüche 4 bis 7, **dadurch gekennzeichnet, dass** der Luftauslassdeckel (32,132) mittels Schraubelementen (35,135) an der Wand (53,153) befestigbar ist.

9. Motor-Pumpenaggregat nach einem der vorangegangenen Ansprüche, **dadurch gekennzeichnet, dass** die beiden Einlasskanäle (11,111) über im Pumpengehäuse (5,105) ausgebildete Kanäle (54,-) miteinander verbunden sind und einen gemeinsamen Anschluss (25,125) aufweisen.

10. Motor-Pumpenaggregat nach Anspruch 9, **dadurch gekennzeichnet, dass** der Anschluss (25) Mittel zur Befestigung eines Schlauches aufweist.

11. Motor-Pumpenaggregat nach Anspruch 10, **dadurch gekennzeichnet, dass** der Anschluss (25) als Ansaugrohrstutzen ausgebildet ist.

12. Motor-Pumpenaggregat nach Anspruch 9, **dadurch gekennzeichnet, dass** ein Adapter (157) vorgesehen ist, der in dem Anschluss (125) dichtend befestigt ist und der einen Adapterabgang (158) aufweist, wobei der Adapterabgang (158) Mittel zur Befestigung eines Schlauches aufweist.

13. Motor-Pumpenaggregat nach Anspruch 12, **dadurch gekennzeichnet, dass** der Adapter (157) mittels einer Rastverbindung in dem Anschluss (125) positionierbar ist.

14. Motor-Pumpenaggregat nach Anspruch 13, **dadurch gekennzeichnet, dass** der Adapter (157) mittels stiftförmiger Elemente (159) drehbar in dem Anschluss (125) angeordnet ist, wobei die stiftförmigen Elemente (159) in eine Außennut des Adapters (157) eingreifen.

15. Motor-Pumpenaggregat nach einem der Ansprüche 9 bis 14, **dadurch gekennzeichnet, dass** das Pumpengehäuse (105) zwei gegenüberliegende Anschlüsse (125) aufweist, wobei ein Anschluss (125) verschlossen ist.

16. Motor-Pumpenaggregat nach einem der vorangegangenen Ansprüche, **dadurch gekennzeichnet, dass** das Pumpengehäuse (5,105) aus Kunststoff oder aus Aluminium hergestellt ist.

17. Motor-Pumpenaggregat nach einem der vorangegangenen Ansprüche, **dadurch gekennzeichnet, dass** der Arbeitsraumdeckel (6,106) aus Kunststoff oder aus Aluminium hergestellt ist.

18. Motor-Pumpenaggregat nach einem der vorangegangenen Ansprüche, **dadurch gekennzeichnet, dass** das Einlassventil (12) und das Auslassventil (14) eines Arbeitsraumes (7) jeweils als vormontierbare Ventileinheit (20) vorgesehen sind.

19. Motor-Pumpenaggregat nach Anspruch 18, **dadurch gekennzeichnet, dass** die vormontierbare Ventileinheit (20) jeweils in den Arbeitsraumdeckel (6) integrierbar ist und mit diesem eine vormontierbare Arbeitsraumdeckeleinheit (21) bildet.

20. Motor-Pumpenaggregat nach einem der vorangegangenen Ansprüche, **dadurch gekennzeichnet, dass** der Arbeitsraumdeckel (106) einen Oberdeckel (155) und einen Unterdeckel (156) aufweist, welche abdichtend miteinander verbunden sind, wobei die Ventile (112,114) zwischen Oberdeckel (155) und Unterdeckel (156) vorgesehen sind.

21. Motor-Pumpenaggregat nach Anspruch 20, **dadurch gekennzeichnet, dass** der Oberdeckel (155) mit dem Unterdeckel (156) verschweißt oder verschraubt ist.

22. Motor-Pumpenaggregat nach Anspruch 21, **dadurch gekennzeichnet, dass** der Einlasskanal (111) im Oberdeckel (155) ausgebildet ist und der Auslasskanal(113) zwischen Oberdeckel (155) und Unterdeckel (156) vorgesehen ist.

23. Motor-Pumpenaggregat nach Anspruch 22, **dadurch gekennzeichnet, dass** sich der Einlasskanal (111) im Bereich des Einlassventils (112) in mehrere, kreisringförmig um eine Mittelachse des Einlassventils (112) angeordnete Einzelkanäle (160) aufteilt.

24. Motor-Pumpenaggregat nach Anspruch 23, **dadurch gekennzeichnet, dass** das Einlassventil (112) sowie das Auslassventil (114) jeweils schräg zu Symmetrieachsen der Pumpe (102) angeordnet ist.

25. Motor-Pumpenaggregat nach Anspruch 24, **dadurch gekennzeichnet, dass** die Ventile (112,114) als Plattenventile mit Ventilscheibe (117,118) vorgesehen sind.

26. Motor-Pumpenaggregat nach Anspruch 25, **dadurch gekennzeichnet, dass** im Unterdeckel (156) Positionierungszapfen (163,164) zur Positionierung von Ventilscheiben (117,118) vorgesehen sind.

27. Motor-Pumpenaggregat nach Anspruch 26, **dadurch gekennzeichnet, dass** im Unterdeckel (156) dem Einlass- und dem Auslassventil (112,114) zugeordnete Arbeitsraumdeckelöffnungen (161,162) vorgesehen sind, wobei die Arbeitsraumdeckelöffnungen (161,162) kreisringförmig um eine Mittelachse der Ventile (112,114) angeordnet sind.

28. Motor-Pumpenaggregat nach einem der vorangegangenen Ansprüche 19 bis 27, **dadurch gekennzeichnet, dass** die Einlass- und Auslasskanäle (11,111,13,113) derart im Pumpengehäuse (5,105) angeordnet sind, dass die beiden Arbeitsraumdeckel (6,106) identisch ausgestaltet sind.

29. Motor-Pumpenaggregat nach einem der vorangegangenen Ansprüche, **dadurch gekennzeichnet, dass** Abstandseinstellmittel vorgesehen sind, um den Abstand der Arbeitsraumdeckel (6,106) von der Arbeitsmembrane (4,104) einzustellen.

30. Motor-Pumpenaggregat nach Anspruch 29, **dadurch gekennzeichnet, dass** die Abstandseinstellmittel durch eine einstellbare Verbindung zwischen Pleuelstange (10,110) und einem mit der Arbeitsmembran (4,104) verbundenen Stößel (45,145) gebildet sind.

31. Motor-Pumpenaggregat nach einem der vorangegangenen Ansprüche, **dadurch gekennzeichnet, dass** Abstandseinstellmittel vorgesehen sind, um den Abstand der Arbeitsraumdeckel (6,106) von dem Pumpengehäuse (5, 105) einzustellen.

32. Motor-Pumpenaggregat nach Anspruch 31, **dadurch gekennzeichnet, dass** die Einstellung des Abstandes mittels einer Schweißverbindung erfolgt.

33. Motor-Pumpenaggregat nach Anspruch 31, **dadurch gekennzeichnet, dass** die Einstellung des Abstandes mittels einer Schraubverbindung zwischen Arbeitsraumdeckel (6,106) und Pumpengehäuse (5, 105) erfolgt.

34. Motor-Pumpenaggregat nach einem der vorangegangenen Ansprüche, **dadurch gekennzeichnet, dass** eine Motorwelle (39,139) des elektrischen Motors (3,103) in einem ersten, im Motor (3,103) angeordneten Lager und in einem zweiten Lager (40,140) gelagert ist, wobei das zweite Lager (40,140) zum Teil von einem Motorgehäuse (41,141) und zum Teil von dem Pumpengehäuse (5,105) aufgenommen wird, und dass ein Motorwellenende (42,142) in das Pumpengehäuse (5,105) hineinragt.

35. Motor-Pumpenaggregat nach Anspruch 34, **dadurch gekennzeichnet, dass** der Kurbelantrieb (108) auf der Motorwelle (139) angeordnet ist.

36. Motor-Pumpenaggregat nach Anspruch 34, **dadurch gekennzeichnet, dass** der Kurbelantrieb (8) auf einer Exzenterwelle (43) angeordnet ist, welche mit der Motorwelle (39) mittels einer Gewindeverbindung verbunden ist, wobei Mittelachsen (M,E) der Motorwelle (39) und der Exzenterwelle (43) fluchten.

37. Motor-Pumpenaggregat nach Anspruch 35 oder 36, **dadurch gekennzeichnet, dass** Mittelpunkte der Exzenter (9,109) diametral bezogen auf eine Mittelachse (M,E) der Motorwelle (39,139) bzw. der Exzenterwelle (43,143) angeordnet sind.

38. Motor-Pumpenaggregat nach einem der vorangegangenen Ansprüche, **dadurch gekennzeichnet, dass** die Exzenter (9) einstückig als Doppelexzenter ausgebildet sind.

39. Motor-Pumpenaggregat nach einem der vorangegangenen Ansprüche, **dadurch gekennzeichnet, dass** das Pumpengehäuse (5,105) und die Arbeitsraumdeckel (6,106) Mittel zur definierten Positionierung der Arbeitsraumdeckel (6,106) auf dem Pumpengehäuse (5,105) aufweisen.

40. Motor-Pumpenaggregat nach einem der vorangegangenen Ansprüche, **dadurch gekennzeichnet, dass** die Ansteuerung des Motor-Pumpenaggregates (1,101) über eine elektronische Steuereinheit in Abhängigkeit eines Signals eines Sensors erfolgt, welcher einen Druckunterschied zwischen der Vakuumkammer und der Arbeitskammer oder einen absoluten Druck in der Vakuumkammer des Bremskraftverstärkers erfasst.

41. Motor-Pumpenaggregat nach einem der vorangegangenen Ansprüche, **dadurch gekennzeichnet, dass** die Pleuelstangen (110) im Bereich eines Pleuelauges (171) eingespritzte Stützringe (169) zur Stabilisierung von Kugellagern (146) aufweisen.

42. Motor-Pumpenaggregat nach einem der vorangegangenen Ansprüche 1 bis 40, **dadurch gekennzeichnet, dass** die Pleuelstangen (110) im Bereich eines Pleuelauges (171) einen Schlitz (170) aufweisen.

43. Kraftfahrzeugbremsanlage, **dadurch gekennzeichnet, dass** die Kraftfahrzeugbremsanlage ein Motor-Pumpenaggregat (1,101) nach einem der vorangegangenen Ansprüche umfasst.

## Claims

1. Motor/pump assembly (1, 101) for the provision of pressure for a brake actuation device of a motor vehicle brake system having a vacuum brake booster, comprising a pump (2, 102) and an electric motor (3, 103) driving the pump (2, 102), the pump (2, 102) being provided as a double diaphragm pump with two opposite working diaphragms (4, 104) which are in each case tension-mounted between a pump casing (5, 105) and a working-space cover (6, 106) and thereby delimit a working space (7, 107) and which can be moved by means of a crank mechanism (8, 108) having an eccentric (9, 109) and connecting rods (10, 110), the working space (7, 107) being assigned in each case an inlet duct (11, 111) with an inlet valve (12, 112) and an outlet duct (13, 113) with an outlet valve (14, 114), **characterized in that** the outlet ducts (13, 113) are provided, arranged in the working-space covers (6, 106) and in the pump casing (5, 115) in such a way that air displaced out of the working spaces (7, 107) is conducted into an inner space (28, 128) surrounding the crank mechanism (8, 108), of the pump casing (5, 105), and **in that** an air outlet unit (29, 129) is provided, which allows a low-noise blow-out of the air from the inner space (28, 128).

2. Motor/pump assembly according to Claim 1, **characterized in that** air outlet unit (29, 129) has means for sound absorption.

3. Motor/pump assembly according to Claim 2, **characterized in that** the air outlet unit (29, 129) sealingly closes a perforation (48, 148) in a wall (53, 153) of the pump casing (5, 105).

4. Motor/pump assembly according to Claim 3, **characterized in that** the air outlet unit (29) comprises a filter casing (30), a filter (31), an air outlet cover (32), an air outlet closing cap (33) and a valve body (34) and is provided as a premountable subassembly.

5. Motor/pump assembly according to Claim 4, **characterized in that** the air outlet cover (32) the air outlet closing cap (33) and the valve body (34) form a non-return valve (49).

6. Motor/pump assembly according to Claim 4, **characterized in that** the filter casing (130), the air outlet closing cap (133) and the valve body (134) form a non-return valve (149).

7. Motor/pump assembly according to Claim 5, **characterized in that** the filter casing (130) is riveted to the air outlet cover (132).

8. Motor/pump assembly according to one of Claims 4 to 7, **characterized in that** the air outlet cover (32, 132) can be fastened to the wall (53, 153) by means of screw elements (35, 135).

9. Motor/pump assembly according to one of the preceding claims, **characterized in that** the two inlet ducts (11, 111) are connected to one another via ducts (54 -) formed in the pump casing (5, 105) and have a common connection (25, 125).

10. Motor/pump assembly according to Claim 9, **characterized in that** the connection (25) has means for fastening a hose.

11. Motor/pump assembly according to Claim 10, **characterized in that** the connection (25) is designed as an intake pipe connection piece.

12. Motor/pump assembly according to Claim 9, **characterized in that** an adapter (157) is provided, which is fastened sealingly in the connection (125) and which has an adapter exit (158), the adapter exit (158) having means for fastening a hose.

13. Motor/pump assembly according to Claim 12, **characterized in that** the adapter (157) can be positioned in the connection (125) by means of a latching connection.

14. Motor/pump assembly according to Claim 13, **characterized in that** the adapter (157) is arranged rotatably in the connection (125) by means of pin-shaped elements (159), the pin-shaped elements (159) engaging into an outer groove of the adapter (157).

15. Motor/pump assembly according to one of Claims 9 to 14, **characterized in that** the pump casing (105) has two mutually opposite connections (125), one connection (125) being closed.

16. Motor/pump assembly according to one of the preceding claims, **characterized in that** the pump casing (5, 105) is produced from plastic or from aluminium.

17. Motor/pump assembly according to one of the preceding claims, **characterized in that** the working-space cover (6, 106) is produced from plastic or from aluminium.

18. Motor/pump assembly according to one of the preceding claims, **characterized in that** the inlet valve (12) and the outlet valve (14) of a working space (7) are in each case provided as a premountable valve unit (20).

19. Motor/pump assembly according to Claim 18, **characterized in that** the premountable valve unit (20) can be integrated in each case into the working-space cover (6) and with the latter forms a premountable working-space cover unit (21).

20. Motor/pump assembly according to one of the preceding claims, **characterized in that** the working-space cover (106) has a top cover (155) and a bottom cover (156) which are connected sealingly to one another, the valves (112, 114) being provided between the top cover (155) and bottom cover (156).

21. Motor/pump assembly according to Claim 20, **characterized in that** the top cover (155) is welded or screwed to the bottom cover (156).

22. Motor/pump assembly according to Claim 21, **characterized in that** the inlet duct (111) is formed in the top cover (155), and the outlet duct (113) is provided between the top cover (155) and bottom cover (156).

23. Motor/pump assembly according to Claim 22, **characterized in that** the inlet duct (111) is divided, in the region of the inlet valve (112), into a plurality of individual ducts (160) arranged annularly about a mid-axis of the inlet valve (112).

24. Motor/pump assembly according to Claim 23, **characterized in that** the inlet valve (112) and the outlet valve (114) are in each case arranged obliquely with respect to axes of symmetry of the pump (102).

25. Motor/pump assembly according to Claim 24, **characterized in that** the valves (112, 114) are provided as plate valves with a valve disc (117, 118).

26. Motor/pump assembly according to Claim 25, **characterized in that** positioning tenons (163, 164) for the positioning of valve discs (117, 118) are provided in the bottom cover (156).

27. Motor/pump assembly according to Claim 26, **characterized in that** working-space cover orifices (161, 162) assigned to the inlet and the outlet valve (112, 114) are provided in the bottom cover (156), the working-space cover orifices (161, 162) being arranged annularly about a mid-axis of the valves (112, 114).

28. Motor/pump assembly according to one of the preceding Claims 19 to 27, **characterized in that** the inlet and outlet ducts (11, 111, 13, 113) are arranged in the pump casing (5, 105) in such a way that the two working-space covers (6, 106) are configured identically.

29. Motor/pump assembly according to one of the preceding claims, **characterized in that** distance setting means are provided in order to set the distance of the working-space covers (6, 106) from the working diaphragms (4, 104).

30. Motor/pump assembly according to Claim 29, **characterized in that** the distance setting means are formed by a settable connection between the connecting rods (10, 110) and a tappet (45, 145) connected to the working diaphragm (4, 104).

31. Motor/pump assembly according to one of the preceding claims, **characterized in that** distance setting means are provided in order to set the distance of the working-space covers (6, 106) from the pump casing (5, 105).

32. Motor/pump assembly according to Claim 31, **characterized in that** the setting of the distance takes place by means of a welded connection.

33. Motor/pump assembly according to Claim 31, **characterized in that** the setting of the distance takes place by means of a screw connection between the working-space cover (6, 106) and pump casing (5, 105).

34. Motor/pump assembly according to one of the preceding claims, **characterized in that** a motor shaft (39, 139) of the electric motor (3, 103) is mounted in a first bearing arranged in the motor (3, 103) and in a second bearing (40, 140), the second bearing (40, 140) being received partly by a motor casing (41, 141) and partly by the pump casing (5, 105), and **in that** a motor-shaft end (42, 142) projects into the pump casing (5, 105).

35. Motor/pump assembly according to Claim 34, **characterized in that** the crank mechanism (108) is arranged on the motor shaft (139).

36. Motor/pump assembly according to Claim 34, **characterized in that** the crank mechanism (8) is arranged on an eccentric shaft (43) which is connected to the motor shaft (39) by means of a threaded connection, mid-axes (M, E) of the motor shaft (39) and of the eccentric shaft (43) being in alignment.

37. Motor/pump assembly according to Claim 35 or 36, **characterized in that** mid-points of the eccentrics (9, 109) are arranged diametrically with respect to a mid-axis (M, E) of the motor shaft (39, 139) or of the eccentric shaft (43, 143).

38. Motor/pump assembly according to one of the preceding claims, **characterized in that** the eccentrics (9) are formed in one piece as a double eccentric.

39. Motor/pump assembly according to one of the preceding claims, **characterized in that** the pump casing (5, 105) and the working-space covers (6, 106) have means for the defined positioning of the working-space covers (6, 106) on the pump casing (5, 105).

40. Motor/pump assembly according to one of the preceding claims, **characterized in that** the activation of the motor/pump assembly (1, 101) takes place via an electronic control unit as a function of a signal from a sensor which detects a pressure difference between the vacuum chamber and the working chamber or an absolute pressure in the vacuum chamber of the brake booster.

41. Motor/pump assembly according to one of the preceding claims, **characterized in that** the connecting rods (110) have, in the region of a connecting-rod eye (171), injection-moulded supporting rings (169) for the stabilization of ball bearings (146).

42. Motor/pump assembly according to one of the preceding Claims 1 to 40, **characterized in that** the connecting rods (110) have, in the region of a connecting-rod eye (171), a slot (170).

43. Motor vehicle brake system, **characterized in that** the motor vehicle brake system comprises a motor/pump assembly (1, 101) according to one of the preceding claims.

## Revendications

1. Groupe moteur-pompe (1, 101) pour fournir de la pression pour un dispositif de commande de frein d'une installation de frein d'un véhicule automobile comprenant un amplificateur de la force de freinage à vide, comprenant une pompe (2, 102) et un moteur électrique (3, 103) entraînant la pompe (2, 102), la pompe (2, 102) étant prévue sous forme de pompe à double membrane avec deux membranes de travail opposées (4, 104), qui sont serrées chacune entre un boîtier de pompe (5, 105) et un couvercle de chambre de travail (6, 106), et qui délimitent ainsi une chambre de travail (7, 107) et qui peuvent être déplacées au moyen d'un entraînement de vilebrequin (8, 108) présentant des excentriques (9, 109) et des tiges de bielles (10, 110), la chambre de travail (7, 107) étant associée à chaque fois à un canal d'entrée (11, 111) avec une soupape d'entrée (12, 112) et à un canal de sortie (13, 113) avec une soupape de sortie (14, 114), **caractérisé en ce que** l'on prévoit de disposer les canaux de sortie (13, 113) dans les couvercles de la chambre de travail (6, 106) et dans le boîtier de pompe (5, 105) de telle sorte que de l'air refoulé hors des chambres de travail (7, 107) soit guidé dans un espace interne (28, 128) du boîtier de pompe (5, 105) entourant l'entraînement de vilebrequin (8, 108), et **en ce qu'**une unité de sortie d'air (29, 129) est prévue, laquelle permet un soufflage silencieux de l'air hors de l'espace interne (28, 128).

2. Groupe moteur-pompe selon la revendication 1, **caractérisé en ce que** l'unité de sortie d'air (29, 129) présente des moyens pour l'atténuation des sons.

3. Groupe moteur-pompe selon la revendication 2, **caractérisé en ce que** l'unité de sortie d'air (29, 129) ferme hermétiquement un orifice (48, 148) d'une paroi (53, 153) du boîtier de pompe (5, 105).

4. Groupe moteur-pompe selon la revendication 3, **caractérisé en ce que** l'unité de sortie d'air (29) comprend un boîtier de filtre (30), un filtre (31), un couvercle de sortie d'air (32), un capuchon de fermeture de sortie d'air (33) ainsi qu'un corps de soupape (34) et est prévue sous forme de module prémontable.

5. Groupe moteur-pompe selon la revendication 4, **caractérisé en ce que** le couvercle de sortie d'air (32), le capuchon de fermeture de sortie d'air (33) ainsi que le corps de soupape (34) forment une soupape de non retour (49).

6. Groupe moteur-pompe selon la revendication 4, **caractérisé en ce que** le boîtier de filtre (130), le capuchon de fermeture de sortie d'air (133) ainsi que le corps de soupape (134) forment une soupape de non retour (149).

7. Groupe moteur-pompe selon la revendication 5, **caractérisé en ce que** le boîtier de filtre (130) est riveté au couvercle de sortie d'air (132).

8. Groupe moteur-pompe selon l'une quelconque des revendications 4 à 7, **caractérisé en ce que** le couvercle de sortie d'air (32, 132) peut être fixé à la paroi (53, 153) au moyen d'éléments de vis (35, 135).

9. Groupe moteur-pompe selon l'une quelconque des revendications précédentes, **caractérisé en ce que** les deux canaux d'entrée (11, 111) sont connectés l'un à l'autre par le biais de canaux (54, -) réalisés dans le boîtier de pompe (5, 105), et présentent un raccord commun (25, 125).

10. Groupe moteur-pompe selon la revendication 9, **caractérisé en ce que** le raccord (25) présente des moyens pour la fixation d'un tuyau.

11. Groupe moteur-pompe selon la revendication 10, **caractérisé en ce que** le raccord (25) est réalisé sous forme de tubulure de tube d'aspiration.

12. Groupe moteur-pompe selon la revendication 9, **caractérisé en ce que** l'on prévoit un adaptateur (157) qui est fixé de manière hermétique dans le raccord (125), et qui présente une sortie d'adaptateur (158), la sortie d'adaptateur (158) présentant des moyens pour la fixation d'un tuyau.

13. Groupe moteur-pompe selon la revendication 12, **caractérisé en ce que** l'adaptateur (157) peut être positionné dans le raccord (125) au moyen d'une connexion par encliquetage.

14. Groupe moteur-pompe selon la revendication 13, **caractérisé en ce que** l'adaptateur (157) est disposé de manière à pouvoir tourner dans le raccord (125) au moyen d'éléments en forme de goupille (159), les éléments en forme de goupille (159) venant en prise dans une rainure extérieure de l'adaptateur (157).

15. Groupe moteur-pompe selon l'une quelconque des revendications 9 à 14, **caractérisé en ce que** le boîtier de pompe (105) présente deux raccords opposés (125), un raccord (125) étant fermé.

16. Groupe moteur-pompe selon l'une quelconque des revendications précédentes, **caractérisé en ce que** le boîtier de pompe (5, 105) est fabriqué en plastique ou en aluminium.

17. Groupe moteur-pompe selon l'une quelconque des revendications précédentes, **caractérisé en ce que** le couvercle de chambre de travail (6, 106) est fabriqué en plastique ou en aluminium.

18. Groupe moteur-pompe selon l'une quelconque des revendications précédentes, **caractérisé en ce que** la soupape d'entrée (12) et la soupape de sortie (14) d'une chambre de travail (7) sont prévues à chaque fois sous forme d'unité de soupape prémontable (20).

19. Groupe moteur-pompe selon la revendication 18, **caractérisé en ce que** l'unité de soupape prémontable (20) peut être intégrée à chaque fois dans le couvercle de chambre de travail (6) et forme avec celui-ci une unité de couvercle de chambre de travail prémontable (21).

20. Groupe moteur-pompe selon l'une quelconque des revendications précédentes, **caractérisé en ce que** le couvercle de chambre de travail (106) présente un couvercle supérieur (155) et un couvercle inférieur (156), qui sont connectés de manière hermétique l'un à l'autre, les soupapes (112, 114) étant prévues entre le couvercle supérieur (155) et le couvercle inférieur (156).

21. Groupe moteur-pompe selon la revendication 20, **caractérisé en ce que** le couvercle supérieur (155) est soudé ou vissé au couvercle inférieur (156).

22. Groupe moteur-pompe selon la revendication 21, **caractérisé en ce que** le canal d'entrée (111) est réalisé dans le couvercle supérieur (155) et le canal de sortie (113) est prévu entre le couvercle supérieur (155) et le couvercle inférieur (156).

23. Groupe moteur-pompe selon la revendication 22, **caractérisé en ce que** le canal d'entrée (111) se subdivise, dans la région de la soupape d'entrée (112), en plusieurs canaux individuels (160) disposés en forme d'anneaux circulaires autour d'un axe médian de la soupape d'entrée (112).

24. Groupe moteur-pompe selon la revendication 23, **caractérisé en ce que** la soupape d'entrée (112) ainsi que la soupape de sortie (114) sont à chaque fois disposées obliquement par rapport aux axes de symétrie de la pompe (102).

25. Groupe moteur-pompe selon la revendication 24, **caractérisé en ce que** les soupapes (112, 114) sont prévues sous forme de soupapes à plaque avec un disque de soupape (117, 118).

26. Groupe moteur-pompe selon la revendication 25, **caractérisé en ce que** des tourillons de positionnement (163, 164) sont prévus dans le couvercle inférieur (156) pour le positionnement de disques de soupape (117, 118).

27. Groupe moteur-pompe selon la revendication 26,
**caractérisé en ce que** des ouvertures de couvercle de chambre de travail (161, 162) associées à la soupape d'entrée et à la soupape de sortie (112, 114) sont prévues dans le couvercle inférieur (156), les ouvertures de couvercle de chambre de travail (161, 162) étant disposées en forme d'anneaux circulaires autour d'un axe médian des soupapes (112, 114).

28. Groupe moteur-pompe selon l'une quelconque des revendications précédentes 19 à 27, **caractérisé en ce que** les canaux d'entrée et de sortie (11, 111, 13, 113) sont disposés dans le boîtier de pompe (5, 105) de telle sorte que les deux couvercles de chambre de travail (6, 106) soient configurés de manière identique.

29. Groupe moteur-pompe selon l'une quelconque des revendications précédentes, **caractérisé en ce que** l'on prévoit des moyens d'ajustement de distance afin d'ajuster la distance des couvercles de chambre de travail (6, 106) à la membrane de travail (4, 104).

30. Groupe moteur-pompe selon la revendication 29, **caractérisé en ce que** les moyens d'ajustement de distance sont formés par une connexion ajustable entre la tige de bielle (10, 110) et un poussoir (45, 145) connecté à la membrane de travail (4, 104).

31. Groupe moteur-pompe selon l'une quelconque des revendications précédentes, **caractérisé en ce que** des moyens d'ajustement de distance sont prévus, afin d'ajuster la distance des couvercles de chambre de travail (6, 106) au boîtier de pompe (5, 105).

32. Groupe moteur-pompe selon la revendication 31, **caractérisé en ce que** l'ajustement de la distance s'effectue au moyen d'une connexion soudée.

33. Groupe moteur-pompe selon la revendication 31, **caractérisé en ce que** l'ajustement de la distance s'effectue au moyen d'une connexion vissée entre le couvercle de chambre de travail (6, 106) et le boîtier de pompe (5, 105).

34. Groupe moteur-pompe selon l'une quelconque des revendications précédentes, **caractérisé en ce qu'**un arbre de moteur (39, 139) du moteur électrique (3, 103) est monté dans un premier palier disposé dans le moteur (3, 103) et dans un deuxième palier (40, 140), le deuxième palier (40, 140) étant en partie reçu par un boîtier de moteur (41, 141) et en partie par le boîtier de pompe (5, 105), et **en ce qu'**une extrémité d'arbre de moteur (42, 142) pénètre dans le boîtier de pompe (5, 105).

35. Groupe moteur-pompe selon la revendication 34, **caractérisé en ce que** l'entraînement de vilebrequin (108) est disposé sur l'arbre de moteur (139).

36. Groupe moteur-pompe selon la revendication 34, **caractérisé en ce que** l'entraînement de vilebrequin (8) est disposé sur un arbre d'excentrique (43), qui est connecté à l'arbre de moteur (39) au moyen d'une connexion filetée, des axes médians (M, E) de l'arbre de moteur (39) et de l'arbre d'excentrique (43) étant en affleurement.

37. Groupe moteur-pompe selon la revendication 35 ou 36, **caractérisé en ce que** des centres des excentriques (9, 109) sont disposés diamétralement par rapport à un axe médian (M, E) de l'arbre de moteur (39, 139) ou de l'arbre d'excentrique (43, 143).

38. Groupe moteur-pompe selon l'une quelconque des revendications précédentes, **caractérisé en ce que** les excentriques (9) sont réalisés d'une seule pièce en tant que doubles excentriques.

39. Groupe moteur-pompe selon l'une quelconque des revendications précédentes, **caractérisé en ce que** le boîtier de pompe (5, 105) et les couvercles de chambre de travail (6, 106) présentent des moyens pour le positionnement défini des couvercles de chambre de travail (6, 106) sur le boîtier de pompe (5, 105).

40. Groupe moteur-pompe selon l'une quelconque des revendications précédentes, **caractérisé en ce que** la commande du groupe moteur-pompe (1, 101) s'effectue par le biais d'une unité de commande électronique en fonction d'un signal d'un capteur, qui détecte une différence de pression entre la chambre à vide et la chambre de travail ou une pression absolue dans la chambre à vide de l'amplificateur de force de freinage.

41. Groupe moteur-pompe selon l'une quelconque des revendications précédentes, **caractérisé en ce que** les tiges de bielle (110) présentent, dans la région d'un oeil de bielle (171), des bagues de support moulées par injection (169), pour stabiliser des roulements à billes (146).

42. Groupe moteur-pompe selon l'une quelconque des revendications précédentes 1 à 40, **caractérisé en ce que** les tiges de bielle (110) présentent une fente (170) dans la région d'un oeil de bielle (171).

43. Installation de frein d'un véhicule automobile, **caractérisée en ce que** l'installation de frein de véhicule automobile comprend un groupe moteur-pompe (1, 101) selon l'une quelconque des revendications précédentes.
